# EUROPEAN PATENT SPECIFICATION

(11) **EP 3 476 697 B1**
(45) Date of publication and mention of the grant of the patent: **31.05.2023**
(21) Application number: 18186819.1
(22) Date of filing: 01.08.2018
(51) Int. Cl.: B62D 15/02, B60W 30/06, B60W 30/095, G05D 1/02

(54) **DEVICE FOR AUTOMATICALLY PARKING VEHICLE AND METHOD FOR CONTROLLING THE SAME**
VORRICHTUNG ZUM AUTOMATISCHEN EINPARKEN VON FAHRZEUGEN UND VERFAHREN ZU DEREN STEUERUNG
DISPOSITIF PERMETTANT DE STATIONNER AUTOMATIQUEMENT UN VÉHICULE ET SON PROCÉDÉ DE COMMANDE

(30) Priority: 24.10.2017 KR 20170138283
(43) Date of publication of application: 01.05.2019
(73) Proprietor: LG Electronics Inc., Seoul, 07336 (KR)
(72) Inventor: NOH, Taeho, 06772 Seoul (KR); LEE, Seongho, 06772 Seoul (KR); GO, Jaedoo, 06772 Seoul (KR)
(74) Representative: Vossius & Partner Patentanwälte Rechtsanwälte mbB

(56) References cited:
- EP-A1- 3 061 655
- DE-A1- 10 332 961
- DE-A1-102015 220 646
- US-A1- 2016 272 244
- US-A1- 2017 015 312
- Maxim Likhachev ET AL: "Planning Long Dynamically Feasible Maneuvers for Autonomous Vehicles", The International Journal of Robotics Research, 1 August 2009 (2009-08-01), pages 933-945, XP055545279, London, England DOI: 10.1177/0278364909340445 Retrieved from the Internet: URL:https://www.cs.cmu.edu/~maxim/files/pl anlongdynfeasmotions_rss08.pdf [retrieved on 2019-01-21]
- MIN KYOUNGWOOK ET AL: "A control system for autonomous vehicle valet parking", 2013 13TH INTERNATIONAL CONFERENCE ON CONTROL, AUTOMATION AND SYSTEMS (ICCAS 2013), IEEE, 20 October 2013 (2013-10-20), pages 1714-1717, XP032540230, ISSN: 2093-7121, DOI: 10.1109/ICCAS.2013.6704211 [retrieved on 2014-01-03]
- BONNAFOUS D ET AL: "Reactive Path Deformation for Nonholonomic Mobile Robots", IEEE TRANSACTIONS ON ROBOTICS, IEEE SERVICE CENTER, PISCATAWAY, NJ, US, vol. 20, no. 6, 1 December 2004 (2004-12-01), pages 967-977, XP011122589, ISSN: 1552-3098, DOI: 10.1109/TRO.2004.829459
- C. Laugier ET AL: "Sensor-based control architecture for a car-like vehicle", Intelligent Robots and Systems, 1998. Proceedings., 1998 IEEE/RSJ Inte rnationalConference on, vol. 1, 1 January 1998 (1998-01-01), pages 216-222, XP055545228, DOI: 10.1109/IROS.1998.724622 ISBN: 978-0-7803-4465-5

## Description

The present invention relates to a device for automatic control, and more particularly, to a device for automatically parking a vehicle.

A vehicle is an apparatus that is moved in a desired direction by a user riding therein. A typical example of the vehicle is an automobile.

Some vehicles are equipped with sensors and electronic devices to provide user convenience. For example, research has been actively conducted on an advanced driver assistance system (ADAS) to provide user convenience for various operations in driving. Further, autonomous vehicles have been developed that control some operations of a vehicle without a user's active control.

In detail, many efforts have been made to develop technologies for automatically controlling operations of a vehicle without user intervention by using such sensors and electronic devices. In particular, compared to normal driving, precise determination and manipulation is required for parking of a vehicle, and for this reason, researches on parking automation have been made for a long time to improve user convenience.

In the common automatic parking technology, a parking path is configured by considering only the surrounding environment sensed at the start of parking, and after configuration of the path, parking is performed along the configured path. However, the environment around the parking space can be changed in real time, and thus if the changes in the environment are not reflected, the safety of the vehicle to be parked cannot be guaranteed.

Therefore, automatic parking of a vehicle should be controlled so that it can be performed safely and efficiently compared to manual parking, by actively coping with the changes in surrounding environments and conditions.

US 2017/015312 A1 relates to a parking assist system that utilizes a plurality of sensors at a vehicle

Maxim Likhachev ET AL: "Planning Long Dynamically Feasible Maneuvers for Autonomous Vehicles", The International Journal of Robotics Research, 1 August 20099, pages 933-945, XP055545279, London, England, DOI: 10.1177/0278364909340445 relates to planning long dynamically-feasible maneuvers for autonomous vehicles.

US 2016/272244 A1 relates to an automatic parking control device that guides a vehicle to a target parking position, and to a parking assistance device that assists driving to a target parking position.

DE 10 2015 220646 A1 relates to a method and a device for reducing a risk of a collision of a motor vehicle with an object and discloses a motor vehicle, a parking facility to a computer program.

DE 103 32 961 A1 relates to a method and a device which detects when a vehicle dives into the opposite lane of a multi-lane lane during a rearward parking operation.

Accordingly, the present invention is proposed to solve the above-noted problems.

As solutions for solving the problems, an object of the present invention is to provide an automatic parking device for a vehicle configured to perform automatic parking safely and efficiently.

It will be appreciated by persons skilled in the art that the objects that could be achieved with the present invention are not limited to what has been particularly described hereinabove and the above and other objects that the present invention could achieve will be more clearly understood from the following detailed description.

The invention is defined by the independent claim. Preferable embodiments are defined by the dependent claims.

The present invention will become better understood from the detailed description given herein below and the accompanying drawings:
FIG. 1 is a view illustrating the external appearance of a vehicle according to an example;
FIG. 2 are different angled views of the external appearance of a vehicle according to an example;
FIGS. 3 and 4 are views illustrating the interior configuration of a vehicle according to an example;
FIGS. 5 and 6 are views illustrating an object according to an example;
FIG. 7 is a block diagram illustrating a vehicle according to an example;
FIG. 8 is a flowchart illustrating a method for autonomously parking a vehicle according to an example of the present disclosure;
FIGs. 9a to 9c are schematic diagrams illustrating examples of vehicle parking control when an object approaches a vehicle from the front of the vehicle before the vehicle turns around;
FIG. 10 is a schematic diagram illustrating an example of vehicle parking control when an object approaches a vehicle from the front of the vehicle after the vehicle turns around;
FIG. 11 is a schematic diagram illustrating another example of vehicle parking control when an object approaches a vehicle from the front of the vehicle;
FIG. 12 is a schematic diagram illustrating an example of vehicle parking control when an object appearing at the side of a vehicle passes in front of the vehicle in a direction crossing with a driving direction of the vehicle before the vehicle turns around;
FIG. 13 is a schematic diagram illustrating an example of vehicle parking control when an object appearing at the side of a vehicle directly approaches the side of the vehicle before the vehicle turns around;
FIG. 14 is a schematic diagram illustrating an example of vehicle parking control when an object appears at the side of a vehicle after the vehicle turns around;
FIG. 15 is a schematic diagram illustrating an example of vehicle parking control when an object approaches a vehicle from the back of the vehicle and then stops before the vehicle turns around;
FIG. 16 is a schematic diagram illustrating an example of vehicle parking control when an object continuously approaches a vehicle from the back of the vehicle before the vehicle turns around;
FIG. 17 is a schematic diagram illustrating an example of vehicle parking control when an object approaches a vehicle from the back of the vehicle and changes its steering to pass by the side of the vehicle before the vehicle turns around;
FIG. 18 is a schematic diagram illustrating an example of vehicle parking control when an object approaches a vehicle from the back of the vehicle and then stops after the vehicle turns around; and
FIG. 19 is a schematic diagram illustrating an example of vehicle parking control when an object continuously approaches a vehicle from the back of the vehicle after the vehicle turns around.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

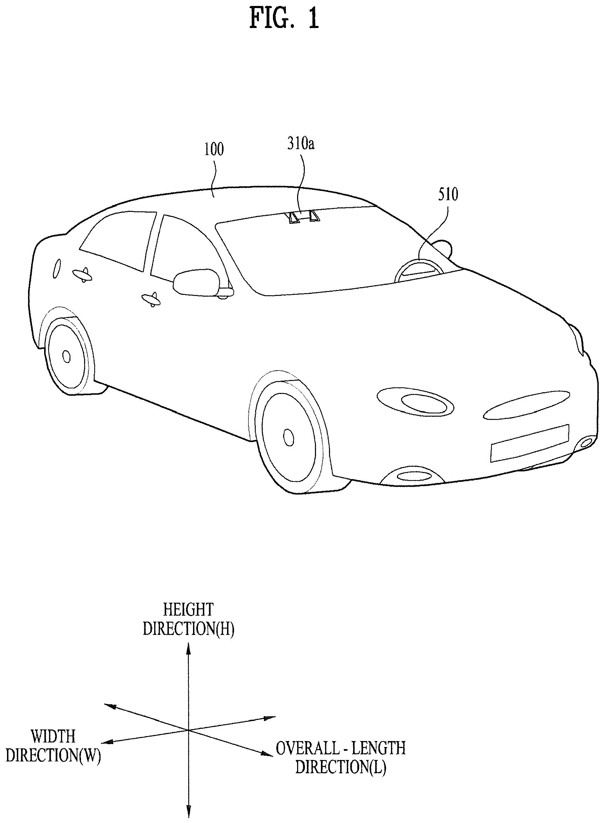

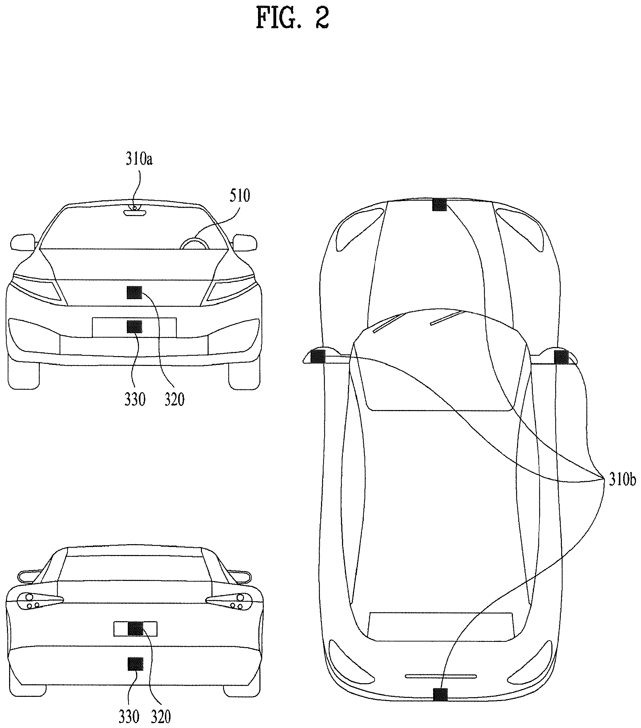

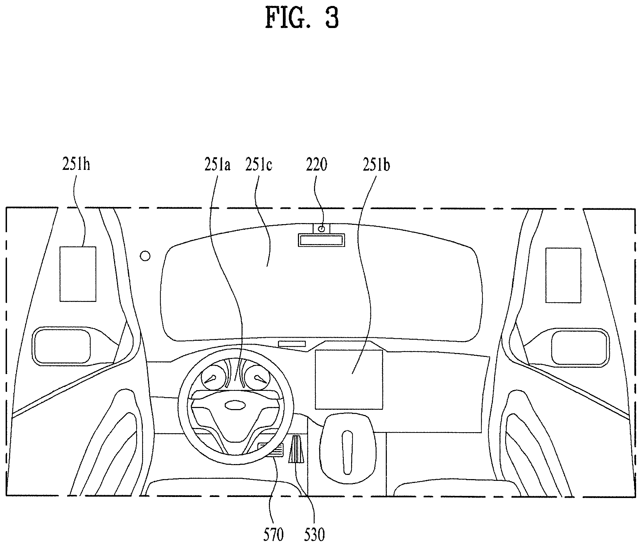

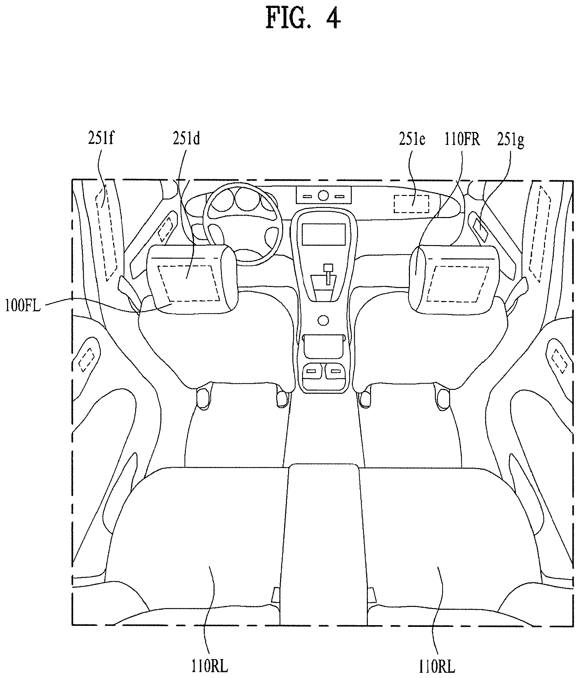

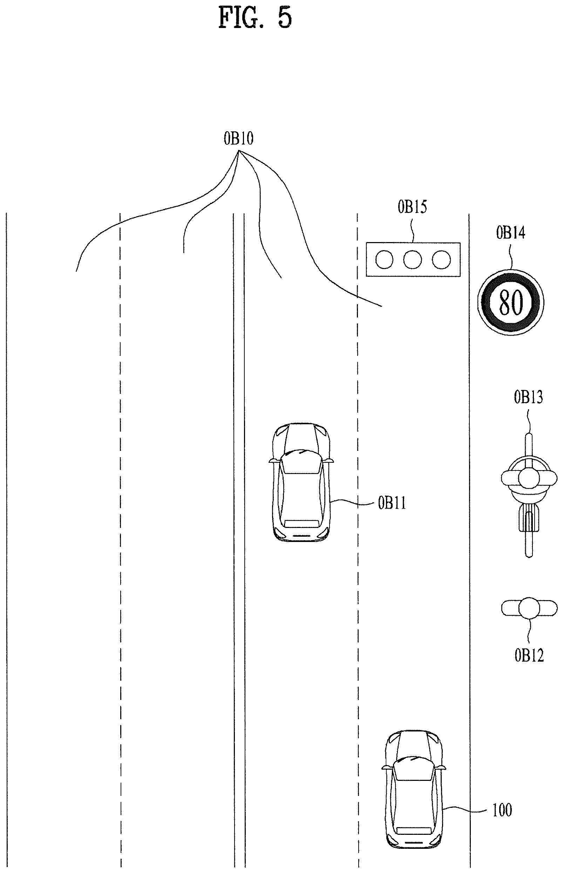

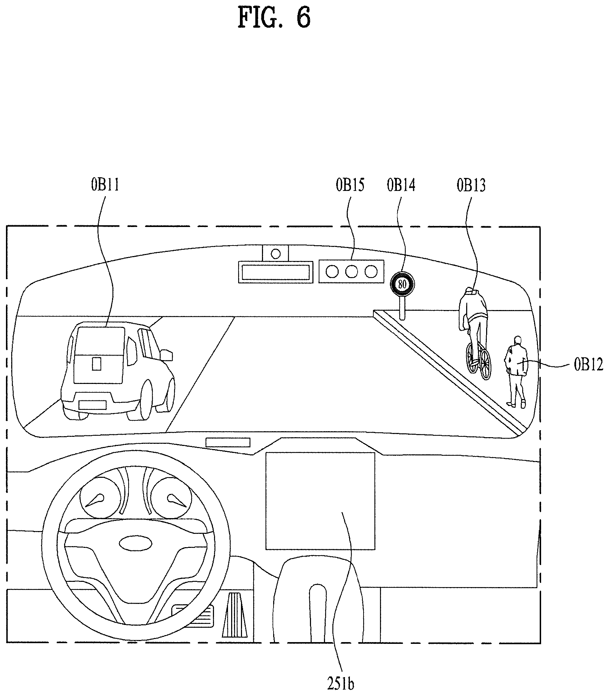

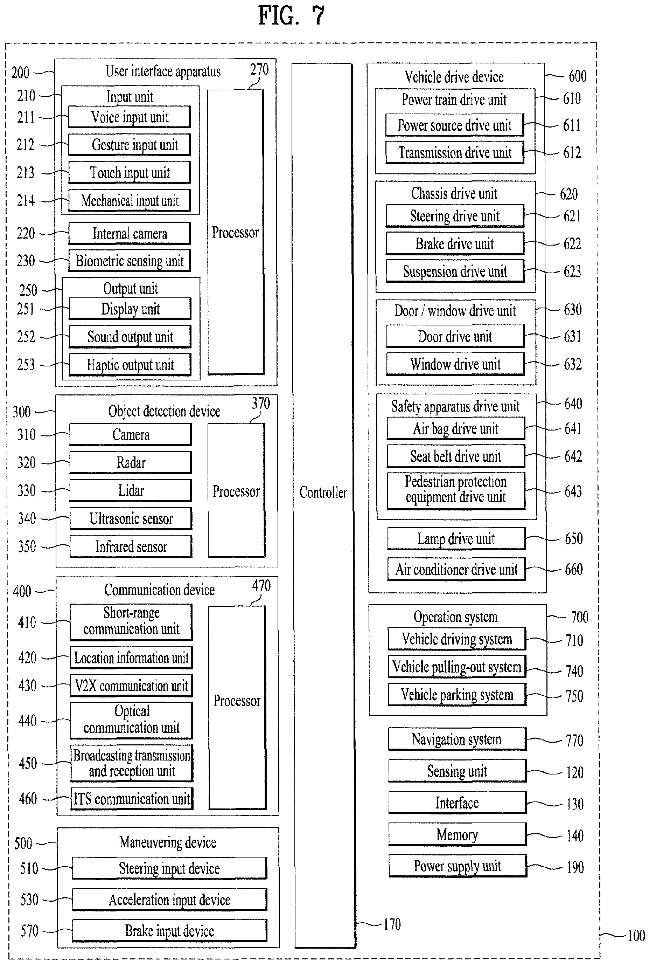

FIG. 1 is a view of the external appearance of a vehicle according to an example, FIG. 2 is different angled views of a vehicle according to an example, FIGS. 3 and 4 are views of the internal configuration of a vehicle according to an example of the present invention FIGS. 5 and 6 are views for explanation of objects according to an example, and FIG. 7 is a block diagram illustrating a vehicle according to an example.

Referring to FIGS. 1 to 7, a vehicle 100 may include a plurality of wheels, which are rotated by a power source, and a steering input device 510 for controlling a driving direction of the vehicle 100.

The vehicle 100 may be an autonomous vehicle.

The vehicle 100 may be switched to an autonomous mode or a manual mode in response to a user input.

For example, in response to a user input received through a user interface apparatus 200, the vehicle 100 may be switched from a manual mode to an autonomous mode, or vice versa.

The vehicle 100 may be switched to the autonomous mode or to the manual mode based on driving environment information.

The driving environment information may include at least one of the following: information on an object outside a vehicle, navigation information, and vehicle state information.

For example, the vehicle 100 may be switched from the manual mode to the autonomous mode, or vice versa, based on driving environment information generated by the object detection device 300.

In another example, the vehicle 100 may be switched from the manual mode to the autonomous mode, or vice versa, based on driving environment information received through a communication device 400.

The vehicle 100 may be switched from the manual mode to the autonomous mode, or vice versa, based on information, data, and a signal provided from an external device.

When the vehicle 100 operates in the autonomous mode, the autonomous vehicle 100 may operate based on an operation system 700.

For example, the autonomous vehicle 100 may operate based on information, data, or signals generated by a driving system 710, a vehicle pulling-out system 740, and a vehicle parking system 750.

While operating in the manual mode, the autonomous vehicle 100 may receive a user input for driving of the vehicle 100 through a maneuvering device 500. In response to the user input received through the maneuvering device 500, the vehicle 100 may be operated.

The term "overall length" means the length from the front end to the rear end of the vehicle 100, the term "overall width" means the width of the vehicle 100, and the term "overall height" means the height from the bottom of the wheel to the roof. In the following description, the term "overall length direction L" may mean the reference direction for the measurement of the overall length of the vehicle 100, the term "overall width direction W" may mean the reference direction for the measurement of the overall width of the vehicle 100, and the term "overall height direction H" may mean the reference direction for the measurement of the overall height of the vehicle 100.

As illustrated in FIG. 7, the vehicle 100 may include the user interface device 200, the object detection device 300, the communication device 400, the maneuvering device 500, a vehicle drive device 600, the operation system 700, a navigation system 770, a sensing unit 120, an interface 130, a memory 140, a controller 170, and a power supply unit 190.

In some examples, the vehicle 100 may further include other components in addition to the aforementioned components, or may not include some of the aforementioned components.

The sensing unit 120 may sense the state of the vehicle. The sensing unit 120 may include an attitude sensor (for example, a yaw sensor, a roll sensor, or a pitch sensor), a collision sensor, a wheel sensor, a speed sensor, a gradient sensor, a weight sensor, a heading sensor, a gyro sensor, a position module, a vehicle forward/reverse movement sensor, a battery sensor, a fuel sensor, a tire sensor, a steering sensor based on the rotation of the steering wheel, an in-vehicle temperature sensor, an in-vehicle humidity sensor, an ultrasonic sensor, an illumination sensor, an accelerator pedal position sensor, and a brake pedal position sensor.

The sensing unit 120 may acquire sensing signals with regard to, for example, vehicle attitude information, vehicle collision information, vehicle driving direction information, vehicle location information (GPS information), vehicle angle information, vehicle speed information, vehicle acceleration information, vehicle tilt information, vehicle forward/reverse movement information, battery information, fuel information, tire information, vehicle lamp information, in-vehicle temperature information, in-vehicle humidity information, steering-wheel rotation angle information, outside illumination information, information about the pressure applied to an accelerator pedal, and information about the pressure applied to a brake pedal.

The sensing unit 120 may further include, for example, an accelerator pedal sensor, a pressure sensor, an engine speed sensor, an Air Flow-rate Sensor (AFS), an Air Temperature Sensor (ATS), a Water Temperature Sensor (WTS), a Throttle Position Sensor (TPS), a Top Dead Center (TDC) sensor, and a Crank Angle Sensor (CAS).

The sensing unit 120 may generate vehicle state information based on sensing data. The vehicle condition information may be information that is generated based on data sensed by a variety of sensors inside a vehicle.

For example, the vehicle state information may include vehicle position information, vehicle speed information, vehicle tilt information, vehicle weight information, vehicle direction information, vehicle battery information, vehicle fuel information, vehicle tire pressure information, vehicle steering information, in-vehicle temperature information, in-vehicle humidity information, pedal position information, vehicle engine temperature information, etc.

The interface 130 may serve as a passage for various kinds of external devices that are connected to the vehicle 100. For example, the interface 130 may have a port that is connectable to a mobile terminal and may be connected to the mobile terminal via the port. In this case, the interface 130 may exchange data with the mobile terminal.

Meanwhile, the interface 130 may serve as a passage for the supply of electrical energy to a mobile terminal connected thereto. When the mobile terminal is electrically connected to the interface 130, the interface 130 may provide electrical energy, supplied from the power supply unit 190, to the mobile terminal under control of the controller 170.

The memory 140 is electrically connected to the controller 170. The memory 140 may store basic data for each unit, control data for the operational control of each unit, and input/output data. The memory 140 may be any of various hardware storage devices, such as a ROM, a RAM, an EPROM, a flash drive, and a hard drive. The memory 140 may store various data for the overall operation of the vehicle 100, such as programs for the processing or control of the controller 170.

In some examples, the memory 140 may be integrally formed with the controller 170, or may be provided as an element of the controller 170.

The controller 170 may control the overall operation of each unit inside the vehicle 100. The controller 170 may be referred to as an Electronic Controller (ECU).

The power supply unit 190 may supply power required to operate each component under control of the controller 170. In particular, the power supply unit 190 may receive power from, for example, a battery inside the vehicle 100.

At least one processor and the controller 170 included in the vehicle 100 may be implemented using at least one selected from among Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and electric units for the implementation of other functions.

The user interface device 200 is provided to support communication between the vehicle 100 and a user. The user interface device 200 may receive a user input, and provide information generated in the vehicle 100 to the user. The vehicle 100 may enable User Interfaces (UI) or User Experience (UX) through the user interface device 200.

The user interface device 200 may include an input unit 210, an internal camera 220, a biometric sensing unit 230, an output unit 250, and a processor 270. Each component of the user interface device 200 may be separated from or integrated with the afore-described interface 130, structurally or operatively.

In some examples, the user interface device 200 may further include other components in addition to the aforementioned components, or may not include some of the aforementioned components.

The input unit 210 is configured to receive information from a user, and data collected in the input unit 210 may be analyzed by the processor 270 and then processed into a control command of the user.

The input unit 210 may be disposed inside the vehicle 100. For example, the input unit 210 may be disposed in a region of a steering wheel, a region of an instrument panel, a region of a seat, a region of each pillar, a region of a door, a region of a center console, a region of a head lining, a region of a sun visor, a region of a windshield, or a region of a window.

The input unit 210 may include a voice input unit 211, a gesture input unit 212, a touch input unit 213, and a mechanical input unit 214.

The voice input unit 211 may convert a voice input of a user into an electrical signal. The converted electrical signal may be provided to the processor 270 or the controller 170.

The voice input unit 211 may include one or more microphones.

The gesture input unit 212 may convert a gesture input of a user into an electrical signal. The converted electrical signal may be provided to the processor 270 or the controller 170.

The gesture input unit 212 may include at least one selected from among an infrared sensor and an image sensor for sensing a gesture input of a user.

In some examples, the gesture input unit 212 may sense a three-dimensional (3D) gesture input of a user. To this end, the gesture input unit 212 may include a plurality of light emitting units for outputting infrared light, or a plurality of image sensors.

The gesture input unit 212 may sense the 3D gesture input by employing a Time of Flight (TOF) scheme, a structured light scheme, or a disparity scheme.

The touch input unit 213 may convert a user's touch input into an electrical signal. The converted electrical signal may be provided to the processor 270 or the controller 170.

The touch input unit 213 may include a touch sensor for sensing a touch input of a user.

In some examples, the touch input unit 210 may be formed integral with a display unit 251 to implement a touch screen. The touch screen may provide an input interface and an output interface between the vehicle 100 and the user.

The mechanical input unit 214 may include at least one selected from among a button, a dome switch, a jog wheel, and a jog switch. An electrical signal generated by the mechanical input unit 214 may be provided to the processor 270 or the controller 170.

The mechanical input unit 214 may be located on a steering wheel, a center fascia, a center console, a cockpit module, a door, etc.

The processor 270 may start a learning mode of the vehicle 100 in response to a user input to at least one of the afore-described voice input unit 211, gesture input unit 212, touch input unit 213, or mechanical input unit 214. In the learning mode, the vehicle 100 may learn a driving route and ambient environment of the vehicle 100. The learning mode will be described later in detail in relation to the object detection device 300 and the operation system 700.

The internal camera 220 may acquire images of the inside of the vehicle 100. The processor 270 may sense a user's condition based on the images of the inside of the vehicle 100. The processor 270 may acquire information on an eye gaze of the user. The processor 270 may sense a gesture of the user from the images of the inside of the vehicle 100.

The biometric sensing unit 230 may acquire biometric information of the user. The biometric sensing unit 230 may include a sensor for acquire biometric information of the user, and may utilize the sensor to acquire finger print information, heart rate information, etc. of the user. The biometric information may be used for user authentication.

The output unit 250 is configured to generate a visual, audio, or tactile output.

The output unit 250 may include at least one selected from among a display unit 251, a sound output unit 252, and a haptic output unit 253.

The display unit 251 may display graphic objects corresponding to various types of information.

The display unit 251 may include at least one selected from among a Liquid Crystal Display (LCD), a Thin Film Transistor-Liquid Crystal Display (TFT LCD), an Organic Light-Emitting Diode (OLED), a flexible display, a 3D display, and an e-ink display.

The display unit 251 may form an inter-layer structure together with the touch input unit 213, or may be integrally formed with the touch input unit 213 to implement a touch screen.

The display unit 251 may be implemented as a Head Up Display (HUD). When implemented as a HUD, the display unit 251 may include a projector module in order to output information through an image projected on a windshield or a window.

The display unit 251 may include a transparent display. The transparent display may be attached on the windshield or the window.

The transparent display may display a predetermined screen with a predetermined transparency. In order to achieve the transparency, the transparent display may include at least one selected from among a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display may be adjustable.

Meanwhile, the user interface device 200 may include a plurality of display units 251a to 251g.

The display unit 251 may be disposed in a region of a steering wheel, a region 251a, 251b or 251e of an instrument panel, a region 251d of a seat, a region 251f of each pillar, a region 251g of a door, a region of a center console, a region of a head lining, a region of a sun visor, a region 251c of a windshield, or a region 251h of a window.

The sound output unit 252 converts an electrical signal from the processor 270 or the controller 170 into an audio signal, and outputs the audio signal. To this end, the sound output unit 252 may include one or more speakers.

The haptic output unit 253 generates a tactile output. For example, the haptic output unit 253 may operate to vibrate a steering wheel, a safety belt, and seats 110FL, 110FR, 110RL, and 110RR so as to allow a user to recognize the output.

The processor 270 may control the overall operation of each unit of the user interface device 200.

In some examples, the user interface device 200 may include a plurality of processors 270 or may not include the processor 270.

In a case where the user interface device 200 does not include the processor 270, the user interface device 200 may operate under control of the controller 170 or a processor of a different device inside the vehicle 100.

Meanwhile, the user interface device 200 may be referred to as a display device for vehicle.

The user interface device 200 may operate under control of the controller 170.

The object detection device 300 is used to detect an object outside the vehicle 100. The object detection device 300 may generate object information based on sensing data.

The object information may include information about the presence of an object, location information of the object, information on distance between the vehicle and the object, and the speed of the object relative to the vehicle 100.

The object may include various objects related to travelling of the vehicle 100.

Referring to FIGS. 5 and 6, an object o may include a lane OB10, a nearby vehicle OB11, a pedestrian OB12, a two-wheeled vehicle OB13, a traffic signal OB14 and OB15, a light, a road, a structure, a bump, a geographical feature, an animal, etc.

The lane OB10 may be a lane in which the vehicle 100 is traveling (hereinafter, referred to as the current driving lane), a lane next to the current driving lane, and a lane in which a vehicle travelling in the opposite direction is travelling. The lane OB10 may include left and right lines that define the lane.

The nearby vehicle OB11 may be a vehicle that is travelling in the vicinity of the vehicle 100. The nearby vehicle OB11 may be a vehicle within a predetermined distance from the vehicle 100. For example, the nearby vehicle OB11 may be a vehicle that is preceding or following the vehicle 100.

The pedestrian OB12 may be a person in the vicinity of the vehicle 100. The pedestrian OB12 may be a person within a predetermined distance from the vehicle 100. For example, the pedestrian OB12 may be a person on a sidewalk or on the roadway.

The two-wheeled vehicle OB13 is a vehicle that is located in the vicinity of the vehicle 100 and moves with two wheels. The two-wheeled vehicle OB13 may be a vehicle that has two wheels within a predetermined distance from the vehicle 100. For example, the two-wheeled vehicle OB13 may be a motorcycle or a bike on a sidewalk or the roadway.

The traffic signal may include a traffic light OB15, a traffic sign plate OB14, and a pattern or text painted on a road surface.

The light may be light generated by a lamp provided in the nearby vehicle. The light may be light generated by a street light. The light may be solar light.

The road may include a road surface, a curve, and slopes, such as an upward slope and a downward slope.

The structure may be a body located around the road in the state of being fixed onto the ground. For example, the structure may include a streetlight, a roadside tree, a building, a traffic light, and a bridge.

The geographical feature may include a mountain and a hill.

Meanwhile, the object may be classified as a movable object or a stationary object. For example, the movable object may include a nearby vehicle and a pedestrian. For example, the stationary object may include a traffic signal, a road, and a structure.

The object detection device 300 may include a camera 310, a radar 320, a lidar 330, an ultrasonic sensor 340, an infrared sensor 350, and a processor 370. Each component of the object detection device 300 may be separated from or integrated with the sensing unit 120, structurally or operatively.

In some examples, the object detection device 300 may further include other components in addition to the aforementioned components, or may not include some of the aforementioned components.

The camera 310 may be located at an appropriate position outside the vehicle 100 in order to acquire images of the outside of the vehicle 100. The camera 310 may be a mono camera, a stereo camera 310a, an Around View Monitoring (AVM) camera 310b, or a 360-degree camera.

Using various image processing algorithms, the camera 310 may acquire location information of an object, information on distance to the object, and information on speed relative to the object.

For example, based on change in size over time of an object in acquired images, the camera 310 may acquire information on distance to the object and information on speed relative to the object.

For example, the camera 310 may acquire the information on distance to the object and the information on speed relative to the object by utilizing a pin hole model or by profiling a road surface.

For example, the camera 310 may acquire the information on distance to the object and the information on the speed relative to the object, based on information on disparity of stereo images acquired by a stereo camera 310a.

For example, the camera 310 may be disposed near a front windshield in the vehicle 100 in order to acquire images of the front of the vehicle 100. Alternatively, the camera 310 may be disposed around a front bumper or a radiator grill.

In another example, the camera 310 may be disposed near a rear glass in the vehicle 100 in order to acquire images of the rear of the vehicle 100. Alternatively, the camera 310 may be disposed around a rear bumper, a trunk, or a tailgate.

In yet another example, the camera 310 may be disposed near at least one of the side windows in the vehicle 100 in order to acquire images of the side of the vehicle 100. Alternatively, the camera 310 may be disposed around a side mirror, a fender, or a door.

The camera 310 may provide an acquired image to the processor 370.

The radar 320 may include an electromagnetic wave transmission unit and an electromagnetic wave reception unit. The radar 320 may be realized as a pulse radar or a continuous wave radar depending on the principle of emission of an electronic wave. In addition, the radar 320 may be realized as a Frequency Modulated Continuous Wave (FMCW) type radar or a Frequency Shift Keying (FSK) type radar depending on the waveform of a signal.

The radar 320 may detect an object through the medium of an electromagnetic wave by employing a time of flight (TOF) scheme or a phase-shift scheme, and may detect a location of the detected object, the distance to the detected object, and the speed relative to the detected object.

The radar 320 may be located at an appropriate position outside the vehicle 100 in order to sense an object located in front of the vehicle 100, an object located to the rear of the vehicle 100, or an object located to the side of the vehicle 100.

The lidar 330 may include a laser transmission unit and a laser reception unit. The lidar 330 may be implemented by the TOF scheme or the phase-shift scheme.

The lidar 330 may be implemented as a drive type lidar or a non-drive type lidar.

When implemented as the drive type lidar, the lidar 300 may rotate by a motor and detect an object in the vicinity of the vehicle 100.

When implemented as the non-drive type lidar, the lidar 300 may utilize a light steering technique to detect an object located within a predetermined distance from the vehicle 100.

The lidar 330 may detect an object through the medium of laser light by employing the TOF scheme or the phase-shift scheme, and may detect a location of the detected object, the distance to the detected object, and the speed relative to the detected object.

The lidar 330 may be located at an appropriate position outside the vehicle 100 in order to sense an object located in front of the vehicle 100, an object located to the rear of the vehicle 100, or an object located to the side of the vehicle 100.

The ultrasonic sensor 340 may include an ultrasonic wave transmission unit and an ultrasonic wave reception unit. The ultrasonic sensor 340 may detect an object based on an ultrasonic wave, and may detect a location of the detected object, the distance to the detected object, and the speed relative to the detected object.

The ultrasonic sensor 340 may be located at an appropriate position outside the vehicle 100 in order to detect an object located in front of the vehicle 100, an object located to the rear of the vehicle 100, and an object located to the side of the vehicle 100.

The infrared sensor 350 may include an infrared light transmission unit and an infrared light reception unit. The infrared sensor 340 may detect an object based on infrared light, and may detect a location of the detected object, the distance to the detected object, and the speed relative to the detected object.

The infrared sensor 350 may be located at an appropriate position outside the vehicle 100 in order to sense an object located in front of the vehicle 100, an object located to the rear of the vehicle 100, or an object located to the side of the vehicle 100.

The processor 370 may control the overall operation of each unit of the object detection device 300.

The processor 370 may detect or classify an object by comparing data sensed by the camera 310, the radar 320, the lidar 330, the ultrasonic sensor 340, and the infrared sensor 350 with pre-stored data.

The processor 370 may detect and track an object based on acquired images. The processor 370 may, for example, calculate the distance to the object and the speed relative to the obj ect.

For example, the processor 370 may acquire information on the distance to the object and information on the speed relative to the object based on a variation in size over time of the object in acquired images.

In another example, the processor 370 may acquire information on the distance to the object or information on the speed relative to the object by employing a pin hole model or by profiling a road surface.

In yet another example, the processor 370 may acquire information on the distance to the object and information on the speed relative to the object based on information on disparity of stereo images acquired from the stereo camera 310a.

The processor 370 may detect and track an object based on a reflection electromagnetic wave which is formed as a result of reflection a transmission electromagnetic wave by the object. Based on the electromagnetic wave, the processor 370 may, for example, calculate the distance to the object and the speed relative to the object.

The processor 370 may detect and track an object based on a reflection laser light which is formed as a result of reflection of transmission laser by the object. Based on the laser light, the processor 370 may, for example, calculate the distance to the object and the speed relative to the object.

The processor 370 may detect and track an object based on a reflection ultrasonic wave which is formed as a result of reflection of a transmission ultrasonic wave by the object. Based on the ultrasonic wave, the processor 370 may, for example, calculate the distance to the object and the speed relative to the object.

The processor 370 may detect and track an object based on reflection infrared light which is formed as a result of reflection of transmission infrared light by the object. Based on the infrared light, the processor 370 may, for example, calculate the distance to the object and the speed relative to the object.

As described before, once the vehicle 100 starts the learning mode in response to a user input to the input unit 210, the processor 370 may store data sensed by the camera 310, the radar 320, the lidar 330, the ultrasonic sensor 340, and the infrared sensor 350 in the memory 140.

Each step of the learning mode based on analysis of stored data, and an operating mode following the learning mode will be described later in detail in relation to the operation system 700.

According to an example, the object detection device 300 may include a plurality of processors 370 or no processor 370. For example, the camera 310, the radar 320, the lidar 330, the ultrasonic sensor 340, and the infrared sensor 350 may include individual processors.

In a case where the object detection device 300 does not include the processor 370, the object detection device 300 may operate under control of the controller 170 or a processor inside the vehicle 100.

The object detection device 300 may operate under control of the controller 170.

The communication device 400 is configured to perform communication with an external device. Here, the external device may be a nearby vehicle, a mobile terminal, or a server.

To perform communication, the communication device 400 may include at least one selected from among a transmission antenna, a reception antenna, a Radio Frequency (RF) circuit capable of implementing various communication protocols, and an RF device.

The communication device 400 may include a short-range communication unit 410, a location information unit 420, a V2X communication unit 430, an optical communication unit 440, a broadcast transmission and reception unit 450, an Intelligent Transport Systems (ITS) communication unit 460, and a processor 470.

In some examples, the communication device 400 may further include other components in addition to the aforementioned components, or may not include some of the aforementioned components.

The short-range communication unit 410 is configured to perform short-range communication. The short-range communication unit 410 may support short-range communication using at least one selected from among BluetoothTM, Radio Frequency IDdentification (RFID), Infrared Data Association (IrDA), Ultra-WideBand (UWB), ZigBee, Near Field Communication (NFC), Wireless-Fidelity (Wi-Fi), Wi-Fi Direct, and Wireless USB (Wireless Universal Serial Bus).

The short-range communication unit 410 may form wireless area networks to perform short-range communication between the vehicle 100 and at least one external device.

The location information unit 420 is configured to acquire location information of the vehicle 100. For example, the location information unit 420 may include a Global Positioning System (GPS) module or a Differential Global Positioning System (DGPS) module.

The V2X communication unit 430 is configured to perform wireless communication between a vehicle and a server (that is, vehicle to infra (V2I) communication), wireless communication between a vehicle and a nearby vehicle (that is, vehicle to vehicle (V2V) communication), or wireless communication between a vehicle and a pedestrian (that is, vehicle to pedestrian (V2P) communication).

The optical communication unit 440 is configured to perform communication with an external device through the medium of light. The optical communication unit 440 may include a light emitting unit, which converts an electrical signal into an optical signal and transmits the optical signal to the outside, and a light receiving unit which converts a received optical signal into an electrical signal.

In some examples, the light emitting unit may be integrally formed with a lamp provided included in the vehicle 100.

The broadcast transmission and reception unit 450 is configured to receive a broadcast signal from an external broadcasting management server or transmit a broadcast signal to the broadcasting management server through a broadcasting channel. The broadcasting channel may include a satellite channel, and a terrestrial channel. The broadcast signal may include a TV broadcast signal, a radio broadcast signal, and a data broadcast signal.

The ITS communication unit 460 may exchange information, data, or signals with a traffic system. The ITS communication unit 460 may provide acquired information or data to the traffic system. The ITS communication unit 460 may receive information, data, or signals from the traffic system. For example, the ITS communication unit 460 may receive traffic information from the traffic system and provide the traffic information to the controller 170. In another example, the ITS communication unit 460 may receive a control signal from the traffic system, and provide the control signal to the controller 170 or a processor provided in the vehicle 100.

The processor 470 may control the overall operation of each unit of the communication device 400.

In some examples, the communication device 400 may include a plurality of processors 470, or may not include the processor 470.

In a case where the communication device 400 does not include the processor 470, the communication device 400 may operate under control of the controller 170 or a processor of a device inside of the vehicle 100.

Meanwhile, the communication device 400 may implement a vehicle display device, together with the user interface device 200. In this case, the vehicle display device may be referred to as a telematics device or an Audio Video Navigation (AVN) device.

The communication device 400 may operate under control of the controller 170.

The maneuvering device 500 is configured to receive a user input for driving the vehicle 100.

In the manual mode, the vehicle 100 may operate based on a signal provided by the maneuvering device 500.

The maneuvering device 500 may include a steering input device 510, an acceleration input device 530, and a brake input device 570.

The steering input device 510 may receive a user input with regard to the direction of travel of the vehicle 100. The steering input device 510 may take the form of a wheel to enable a steering input through the rotation thereof. In some examples, the steering input device may be provided as a touchscreen, a touch pad, or a button.

The acceleration input device 530 may receive a user input for acceleration of the vehicle 100. The brake input device 570 may receive a user input for deceleration of the vehicle 100. Each of the acceleration input device 530 and the brake input device 570 may take the form of a pedal. In some examples, the acceleration input device or the break input device may be configured as a touch screen, a touch pad, or a button.

The maneuvering device 500 may operate under control of the controller 170.

The vehicle drive device 600 is configured to electrically control the operation of various devices of the vehicle 100.

The vehicle drive device 600 may include a power train drive unit 610, a chassis drive unit 620, a door/window drive unit 630, a safety apparatus drive unit 640, a lamp drive unit 650, and an air conditioner drive unit 660.

In some examples, the vehicle drive device 600 may further include other components in addition to the aforementioned components, or may not include some of the aforementioned components.

Meanwhile, the vehicle drive device 600 may include a processor. Each unit of the vehicle drive device 600 may include its own processor.

The power train drive unit 610 may control the operation of a power train.

The power train drive unit 610 may include a power source drive unit 611 and a transmission drive unit 612.

The power source drive unit 611 may control a power source of the vehicle 100.

In the case in which a fossil fuel-based engine is the power source, the power source drive unit 611 may perform electronic control of the engine. As such the power source drive unit 611 may control, for example, the output torque of the engine. The power source drive unit 611 may adjust the output toque of the engine under control of the controller 170.

In a case where an electric motor is the power source, the power source drive unit 611 may control the motor. The power source drive unit 610 may control, for example, the RPM and toque of the motor under control of the controller 170.

The transmission drive unit 612 may control a transmission.

The transmission drive unit 612 may adjust the state of the transmission. The transmission drive unit 612 may adjust a state of the transmission to a drive (D), reverse (R), neutral (N), or park (P) state.

Meanwhile, in a case where an engine is the power source, the transmission drive unit 612 may adjust a gear-engaged state to the drive position D.

The chassis drive unit 620 may control the operation of a chassis.

The chassis drive unit 620 may include a steering drive unit 621, a brake drive unit 622, and a suspension drive unit 623.

The steering drive unit 621 may perform electronic control of a steering apparatus provided inside the vehicle 100. The steering drive unit 621 may change the direction of travel of the vehicle 100.

The brake drive unit 622 may perform electronic control of a brake apparatus provided inside the vehicle 100. For example, the brake drive unit 622 may reduce the speed of the vehicle 100 by controlling the operation of a brake located at a wheel.

Meanwhile, the brake drive unit 622 may control a plurality of brakes individually. The brake drive unit 622 may apply a different degree-braking force to each wheel.

The suspension drive unit 623 may perform electronic control of a suspension apparatus inside the vehicle 100. For example, when the road surface is uneven, the suspension drive unit 623 may control the suspension apparatus so as to reduce the vibration of the vehicle 100.

Meanwhile, the suspension drive unit 623 may control a plurality of suspensions individually.

The door/window drive unit 630 may perform electronic control of a door apparatus or a window apparatus inside the vehicle 100.

The door/window drive unit 630 may include a door drive unit 631 and a window drive unit 632.

The door drive unit 631 may control the door apparatus. The door drive unit 631 may control opening or closing of a plurality of doors included in the vehicle 100. The door drive unit 631 may control opening or closing of a trunk or a tail gate. The door drive unit 631 may control opening or closing of a sunroof.

The window drive unit 632 may perform electronic control of the window apparatus. The window drive unit 632 may control opening or closing of a plurality of windows included in the vehicle 100.

The safety apparatus drive unit 640 may perform electronic control of various safety apparatuses provided inside the vehicle 100.

The safety apparatus drive unit 640 may include an airbag drive unit 641, a safety belt drive unit 642, and a pedestrian protection equipment drive unit 643.

The airbag drive unit 641 may perform electronic control of an airbag apparatus inside the vehicle 100. For example, upon detection of a dangerous situation, the airbag drive unit 641 may control an airbag to be deployed.

The safety belt drive unit 642 may perform electronic control of a seatbelt apparatus inside the vehicle 100. For example, upon detection of a dangerous situation, the safety belt drive unit 642 may control passengers to be fixed onto seats 110FL, 110FR, 110RL, and 110RR with safety belts.

The pedestrian protection equipment drive unit 643 may perform electronic control of a hood lift and a pedestrian airbag. For example, upon detection of a collision with a pedestrian, the pedestrian protection equipment drive unit 643 may control a hood lift and a pedestrian airbag to be deployed.

The lamp drive unit 650 may perform electronic control of various lamp apparatuses provided inside the vehicle 100.

The air conditioner drive unit 660 may perform electronic control of an air conditioner inside the vehicle 100. For example, when the inner temperature of the vehicle 100 is high, an air conditioner drive unit 660 may operate the air conditioner so as to supply cool air to the inside of the vehicle 100.

The vehicle drive device 600 may include a processor. Each unit of the vehicle dive device 600 may include its own processor.

The vehicle drive device 600 may operate under control of the controller 170.

The operation system 700 is a system for controlling the overall driving operation of the vehicle 100. The operation system 700 may operate in the autonomous driving mode.

The operation system 700 may include the driving system 710, the vehicle pulling-out system 740, and the vehicle parking system 750.

In some examples, the operation system 700 may further include other components in addition to the aforementioned components, or may not include some of the aforementioned component.

Meanwhile, the operation system 700 may include a processor. Each unit of the operation system 700 may include its own processor.

Meanwhile, the operation system 700 may control driving in the autonomous mode based on learning. In this case, the learning mode and an operating mode based on the premise of completion of learning may be performed. A description will be given below of a method of executing the learning mode and the operating mode by the processor of the operation system 700.

The learning mode may be performed in the afore-described manual mode. In the learning mode, the processor of the operation system 700 may learn a driving route and ambient environment of the vehicle 100.

The learning of the driving route may include generating map data for a route in which the vehicle 100 drives. Particularly, the processor of the operation system 700 may generate map data based on information detected through the object detection device 300 during driving from a departure to a destination.

The learning of the ambient environment may include storing and analyzing information about an ambient environment of the vehicle 100 during driving and parking. Particularly, the processor of the operation system 700 may store and analyze the information about the ambient environment of the vehicle based on information detected through the object detection device 300 during parking of the vehicle 100, for example, information about a location, size, and a fixed (or mobile) obstacle of a parking space.

The operating mode may be performed in the afore-described autonomous mode. The operating mode will be described based on the premise that the driving route or the ambient environment has been learned in the learning mode.

The operating mode may be performed in response to a user input through the input unit 210, or when the vehicle 100 reaches the learned driving route and parking space, the operating mode may be performed automatically.

The operating mode may include a semi-autonomous operating mode requiring some user's manipulations of the maneuvering device 500, and a full autonomous operating mode requiring no user's manipulation of the maneuvering device 500.

According to an example, the processor of the operation system 700 may drive the vehicle 100 along the learned driving route by controlling the operation system 710 in the operating mode.

According to an example, the processor of the operation system 700 may pull out the vehicle 100 from the learned parking space by controlling the vehicle pulling-out system 740 in the operating mode.

According to an example, the processor of the operation system 700 may park the vehicle 100 in the learned parking space by controlling the vehicle parking system 750 in the operating mode.

Meanwhile, in some examples, in a case where the operation system 700 is implemented as software, the operation system 700 may be a subordinate concept of the controller 170.

Meanwhile, in some examples, the operation system 700 may be a concept including at least one selected from among the user interface device 200, the object detection device 300, the communication device 400, the vehicle drive device 600, and the controller 170.

The driving system 710 may perform driving of the vehicle 100.

The driving system 710 may perform driving of the vehicle 100 by providing a control signal to the vehicle drive device 600 in response to reception of navigation information from the navigation system 770.

The driving system 710 may perform driving of the vehicle 100 by providing a control signal to the vehicle drive device 600 in response to reception of object information from the object detection device 300.

The driving system 710 may perform driving of the vehicle 100 by providing a control signal to the vehicle drive device 600 in response to reception of a signal from an external device through the communication device 400.

Conceptually, the driving system 710 may be a system that drives the vehicle 100, including at least one of the user interface device 200, the object detection device 300, the communication device 400, the maneuvering device 500, the vehicle drive device 600, the navigation system 770, the sensing unit 120, or the controller 170.

The driving system 710 may be referred to as a vehicle driving control device.

The vehicle pulling-out system 740 may perform an operation of pulling the vehicle 100 out of a parking space.

The vehicle pulling-out system 740 may perform an operation of pulling the vehicle 100 out of a parking space, by providing a control signal to the vehicle drive device 600 in response to reception of navigation information from the navigation system 770.

The vehicle pulling-out system 740 may perform an operation of pulling the vehicle 100 out of a parking space, by providing a control signal to the vehicle drive device 600 in response to reception of object information from the object detection device 300.

The vehicle pulling-out system 740 may perform an operation of pulling the vehicle 100 out of a parking space, by providing a control signal to the vehicle drive device 600 in response to reception of a signal from an external device.

Conceptually, the vehicle pulling-out system 740 may be a system that performs pulling-out of the vehicle 100, including at least one of the user interface device 200, the object detection device 300, the communication device 400, the maneuvering device 500, the vehicle drive device 600, the navigation system 770, the sensing unit 120, or the controller 170.

The vehicle pulling-out system 740 may be referred to as a vehicle pulling-out control device.

The vehicle parking system 750 may perform an operation of parking the vehicle 100 in a parking space.

The vehicle parking system 750 may perform an operation of parking the vehicle 100 in a parking space, by providing a control signal to the vehicle drive device 600 in response to reception of navigation information from the navigation system 770.

The vehicle parking system 750 may perform an operation of parking the vehicle 100 in a parking space, by providing a control signal to the vehicle drive device 600 in response to reception of object information from the object detection device 300.

The vehicle parking system 750 may perform an operation of parking the vehicle 100 in a parking space, by providing a control signal to the vehicle drive device 600 in response to reception of a signal from an external device.

Conceptually, the vehicle parking system 750 may be a system that performs parking of the vehicle 100, including at least one of the user interface device 200, the object detection device 300, the communication device 400, the maneuvering device 500, the vehicle drive device 600, the navigation system 770, the sensing unit 120, or the controller 170.

The vehicle parking system 750 may be referred to as a vehicle parking control device.

The navigation system 770 may provide navigation information. The navigation information may include at least one selected from among map information, information on a set destination, information on a route to the set destination, information on various objects along the route, lane information, and information on a current location of the vehicle.

The navigation system 770 may include a memory and a processor. The memory may store navigation information. The processor may control the operation of the navigation system 770.

In some examples, the navigation system 770 may update pre-stored information by receiving information from an external device through the communication device 400.

In some examples, the navigation system 770 may be classified as an element of the user interface device 200.

As described above, the vehicle 100 can be automatically parked in a parking space without user's manipulation by using the configurations described with reference to FIGs. 1 to 7. In this case, automatic parking may be performed after the vehicle 100 is manually driven by the user. Meanwhile, the vehicle 100 can also be driven without the user's manipulation by using the configurations described with reference to FIGs. 1 to 7, and such driving can be generally defined as autonomous driving. That is, considering that automatic parking does not require user's manipulation, it can be defined as autonomous parking, which is performed as part of autonomous driving. However, while automatic parking is performed, surrounding environments and parking conditions could be changed in real time. Thus, it is necessary to precisely control the automatic parking so as to actively cope with changing environments and conditions to obtain parking results as efficient as manual parking. For this reason, a device for automatically parking the vehicle 100 shown in FIGs. 1 to 7 and method for controlling the same has been developed, and the device and method will be described with reference to the accompanying drawings besides FIGS. 1 to 7.

In the present invention it is assumed that automatic parking is performed by an automatic parking device configured for automatic parking and controlled by a method for controlling the automatic parking device. Basically, the automatic parking device may include a control device configured to control operation and driving, and more particularly, parking of the vehicle 100, and sensors or sensing devices for sensing information for the operation and driving. For example, the control device can be implemented with the control unit 170, and the sensor can be implemented with the object detection device 300 and sensing unit 120. However, if necessary, the automatic parking device may further include not only the devices in the vehicle 100 described with reference to FIGs. 1 to 7 but also other devices not included in the vehicle 100. In this regard, for example, the automatic parking device may be implemented with the aforementioned parking system 750 and thus, can perform the above-described basic functions of the parking system 750. Therefore, considering that automatic parking can be achieved by the automatic parking device and control method thereof, the automatic parking device and control method thereof can be defined as an independent device and method in terms of functionality. On the other hand, the automatic parking device can be defined as a part of the vehicle 100 in terms of structures, and thus the automatic parking device and control method thereof, which will be described in detail later, may be considered as the vehicle 100 and control method thereof. Thus, for clarity of description, the descriptions in FIGs. 1 to 7 could be referred to for the structural features of the automatic parking device, and (only) the functional features of the automatic parking device will be described as features of the control method. For the same reason, although the present invention describes that the control method is performed by the vehicle 100, it should be interpreted to mean that the control method is performed by the automatic parking device. Therefore, unless mentioned otherwise, the configurations and features described with reference to FIGs. 1 to 7 can be included and referred to in the following descriptions and drawings of the control method related to the corresponding components. For example, the basic operations of the object detection device 300 described above with reference to FIGS. 1 to 7 can be equally applied to the relevant operation of the control method where the detection device 300 can be applied. Further, the control method according to the present invention is not only for the vehicle 100 illustrated in FIGs. 1 to 7. That is, the control method according to the present invention disclosure can be applied to all types of transportation as well as the vehicle 100.

In addition, the control method, which will be explained in the following, can control the elements described with reference to FIG. 7, that is, various operations of the devices and units, and provide intended functions based on the operations. Thus, the operations and functions related to the control method should be considered not only as the features of the control method but also as the features of the corresponding relevant structural elements. In particular, the control unit or processor 170 can be called various names such as a controller, a controlling device, and the like, and it can control all the elements of the vehicle 100 to perform a prescribed operation. Moreover, although some elements may have dedicated independent control units, i.e., processors for performing specific steps as described above, these elements can be controlled by the control unit 170 in performing the overall control method. In other words, the control unit 170 can be defined as the comprehensive and collective element for all components configured to control operations of the vehicle 100. For these reasons, the following steps should be interpreted to mean the steps are performed by the controller 170 even though this is not explicitly mentioned. Additionally, detailed features of the following steps should be considered as the features of the control unit 170 except features that can be explicitly considered as those of a specific element.

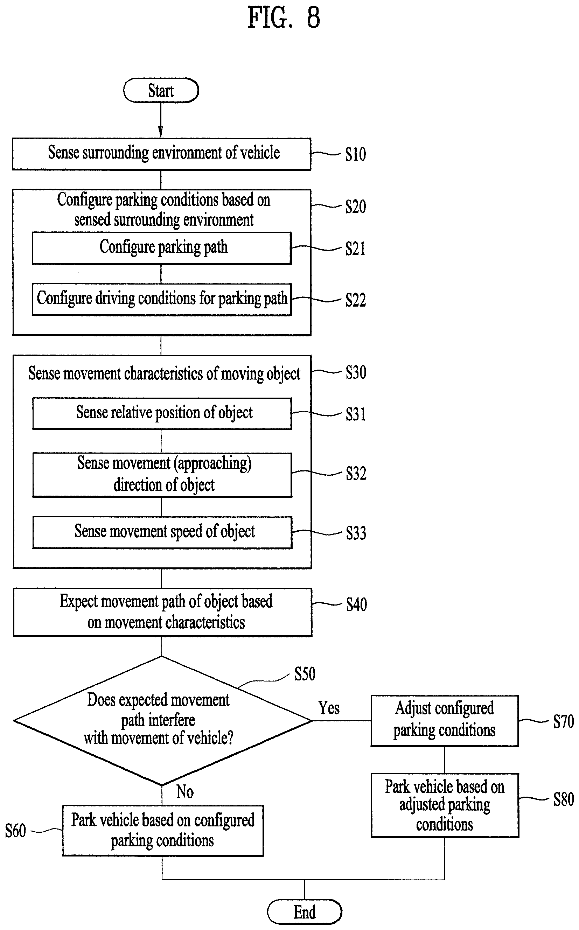

FIG. 8 is a flowchart illustrating a method for autonomously parking a vehicle according to an example of the present disclosure. Hereinafter, the overall features of the control method according to the present disclosure will be described with reference to FIG. 8. Since the vehicle 100 has the capability of performing driving without user's manipulation as described in FIGs. 1 to 7, all the steps of the control method, which will be described in the following, can be performed while a user is in the vehicle 100. Alternatively, the steps can also be performed while the user is not in the vehicle 100. In addition, while the control method of the present invention is performed, the user can get into or out of the vehicle 100 at any time.

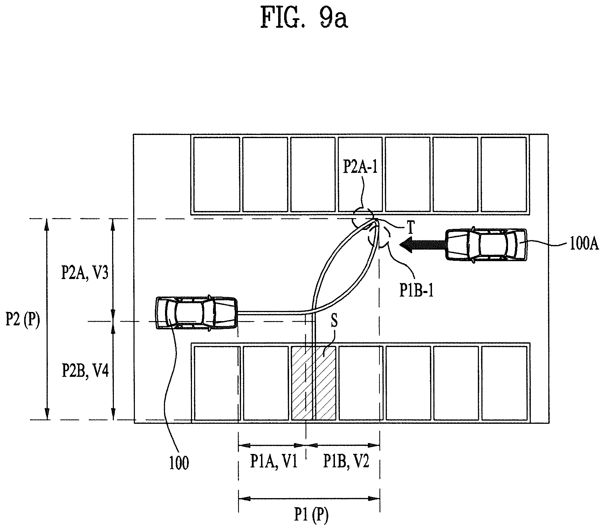

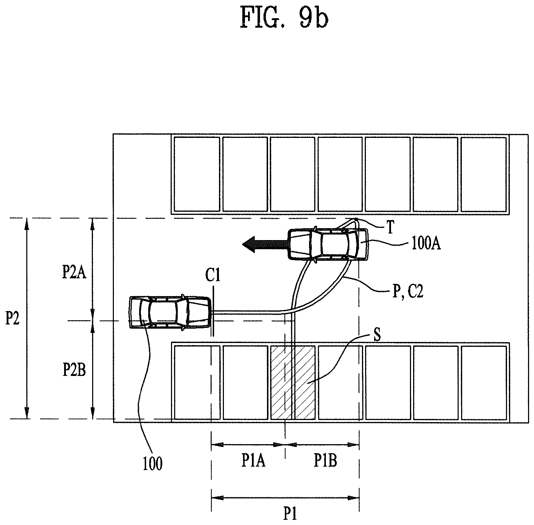

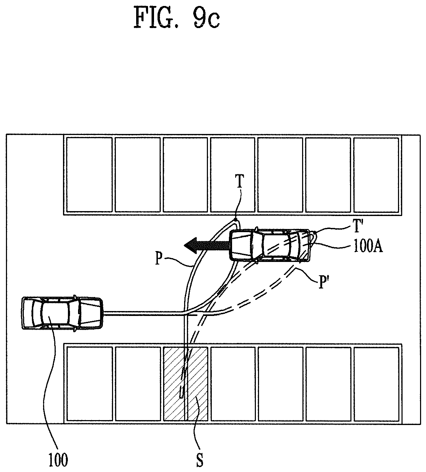

As shown in the following examples of FIGs. 9 to 19, the vehicle 100 can move to a predetermined parking space and then be automatically parked therein. To this end, the vehicle 100 can be driven in various ways. For example, the vehicle 100 can be manually driven by the user, whereas the vehicle 100 can be autonomously driven under control of the control unit 170. In the case of manual driving, the user may obtain various information using sense organs and then manipulate the vehicle 100 according to determination based on the obtained information. On the other hand, in the case of autonomous driving, the vehicle 100 can be driven according to information sensed by a sensor (e.g., detection device 300) and determination by a control device (e.g., control unit 170), and in this case, the automatic parking according to the present invention, which will be performed after driving, may be considered as a part of autonomous driving. Meanwhile, the information detection by the sensor can be performed during the manual driving for the purpose of assisting the user in manipulating the vehicle 100.

In detail, in the case of the autonomous driving, the vehicle 100 can sense its surrounding environment to control vehicle driving or parking without user's manipulation. That is, the vehicle 100 can sense the surrounding environment, i.e., roads and surrounding obstacles using the sensor, and in this case, the object detection device 300 described in FIGs. 1 to 7 can be used as the sensor. In addition, for the autonomous driving or parking, information on the driving state of the vehicle, i.e., information on the current position, speed, steering, etc. may be required together. Thus, the state information of the vehicle can be sensed using the sensing unit 120. Since the configurations and operations of the object detection device 300 and sensing unit 120 have been described in detail with reference to FIGs. 1 to 7, the description thereof will be omitted. Since the surrounding environment information is basically required for not only the autonomous driving but also for the automatic parking, sensing of the surrounding environment can be continuously performed while the control method according to the present invention is performed. For the same reason, the vehicle state information can be continuously obtained until the automatic parking is terminated. Based on the sensed information, the vehicle 100 can be autonomously driven. As described above in FIGs. 1 to 7, the autonomous driving can be performed using the operation system 700 under control of the control unit 170. In addition, if necessary, a path for the autonomous driving can be configured by the operation system 700.

As described above, a predetermined parking space can be set as a target or destination of automatic parking (hereinafter referred to as a target parking space) for the automatic parking. The target parking space can be set before parking of the vehicle 100, and more specifically, at any time before the start of the automatic parking according to the present disclosure. Thus, the target parking space can be set while the vehicle 100 is driven manually or autonomously, that is, it can be set when or before the vehicle 100 starts driving.

In detail, to set the target parking space, the vehicle 100 can be instructed to perform parking. That is, the vehicle 100 may receive a parking instruction from the outside. As described above, the parking instruction may be given while the vehicle 100 is driven manually or autonomously, that is, it may be given when or before the vehicle 100 starts driving. Specifically, the user can instruct the vehicle 100 to perform parking using the user interface device 270. For example, when the user is in the vehicle 100, the user may use the interface device 270 in the vehicle 100. When the user is not in the vehicle 100, the user may use a mobile terminal working as the interface device 270. The descriptions in FIGs. 1 to 7 could be referred to for the configuration and operation of the user interface device 270 with no additional description. The interface device 270 can be used for all controls that require user's manipulation in the same manner. Meanwhile, the vehicle 100, that is, the control unit 170 can decide to park and then start the parking based on determination made by considering surrounding environments and predetermined conditions, instead of following the instruction from the user. For example, when it is determined that the vehicle is in a parking facility or close to a parking space, the vehicle may decide to park and start the parking. This control may be performed when the vehicle arrives at a parking facility/space adjacent to a predetermined destination or when the parking facility/space is set to the destination.

In addition to the parking instruction, the user can directly designate a specific parking space as the target parking space. Here, the specific parking space may be an instantaneously available parking position or space, and thus it can be directly selected by the user. In detail, the specific parking space may be a dedicated parking space where only the user is allowed to park. Since other vehicles cannot use the dedicated parking space, it is always available, and thus it can be directly designated as the target parking space. In addition, the user can check an empty parking space with user's eyes and then designate the empty parking space as the target parking space. Owning to the solid availability, the above-described target parking spaces (i.e., designated parking spaces) can be designated as destinations of autonomous driving. Meanwhile, the vehicle 100, i.e., the control unit 170 can directly designate a specific parking space as the target parking space instead of the user. For example, when the vehicle 100 decides to park by sensing entry into a parking facility, the vehicle 100 can directly designate a dedicated parking space in the corresponding parking facility as the target parking space based on information on the dedicated parking space stored in the memory 140.

If a parking space is not designated, the vehicle 100 can search for available parking spaces. In detail, when the user or vehicle 100 is unable to designate a parking space, for example, when there is no dedicated parking space or empty space, the vehicle 100 can perform a search for available parking spaces. In addition, even when a parking space can be designated, the search for available parking spaces may be instructed and performed to discover a better parking space. In other words, through the search, an instantaneously available parking space can be detected and then designated as the target parking space.

Referring to FIG. 8 again, if the vehicle 100 arrives in the vicinity of the set target parking space, the vehicle 100 can perform the automatic parking. In addition, the vehicle 100, that is, the automatic parking device senses a surrounding environment for the automatic parking [S10].

The vehicle 100 (i.e., automatic parking device) detects a parking space and surrounding environment therearound using a sensor, and to this end, the object detection unit 300 can be used. For example, not only an obstacle around the parking space, arrangement of other parking spaces around the parking space, and lanes around the parking space but also a size and orientation of the parking space can be detected. In addition, for accurate automatic parking, the state of the vehicle 100, i.e., information on the current position, speed, steering, etc. can be detected through the sensing unit 120. Information on the surrounding environment/parking space and information on the vehicle's state can be continuously obtained in the sensing step S10 until the automatic parking according to the present invention is completed, that is, until the vehicle 100 is parked.

Although it is assumed that the control method according to the present invention is performed by the vehicle 100 for convenience of description, it should be interpreted to mean that the control method is performed by the automatic parking device, and more particularly, the control unit 170, which is a device for controlling the automatic parking device. Thus, although not mentioned herein, it could be interpreted to mean that all the following steps and detail operations thereof are performed by the automatic parking device, that is, the control unit 170 or processor thereof. In particular, although not mentioned herein, it could also be interpreted to mean that all the following conditions for automatic parking can be directly sensed by the sensor, and the automatic parking conditions can be determined and configured by the control unit 170 based on the sensed information and other received or stored information. Further, for clarity of description, a set target parking space can be referred to as a parking space.

Next, the vehicle 100 configures parking conditions for the parking space based on the sensed information [S20].

Since a path is required for movement into the parking space, the parking conditions includes a parking path. For this reason, in the configuration step S20, a parking path to the parking space is configured [S21]. Here, the parking path may mean a shot path for locating the vehicle 100 in a nearby parking space different from the common driving path. To optimize the parking path, a shortest path to the parking space may be set to the parking path without threatening safety of the vehicle 100. When there are a plurality of available parking spaces, the plurality of available parking spaces are prioritized, and the highest priority of a parking space may be selected to park the vehicle 100. In this case, although the priority may be given by various standards, it is preferred to prioritize the available parking spaces based on distances among the current position of the vehicle 100 and available parking spaces to minimize unnecessary movement of the vehicle 100. In other words, the highest priority is given to the parking space closest to the vehicle 100, and then the parking space may be selected to park the vehicle 100. In addition, it may be sensed that an obstacle or object, for example, another vehicle is located nearby the parking space, a path capable of not only avoiding a collision with the obstacle but also minimizing a distance to the parking space can be set as the optimal path.

To accurately park the vehicle 100 in the parking space, it is important to align the vehicle 100 with the parking space. Thus, to configure the optimized parking path, alignment of the vehicle 100 and target parking space, orientation change of the vehicle 100 for the alignment can be additionally considered. Considering that a significant change in the vehicle orientation is required for alignment with the parking space, the vehicle 100 needs to be turned around at least one time such that its orientation is significantly changed for the alignment. Thus, the parking path may be configured to include at least one time of turning around. As shown in an example of FIG. 9, a parking path P may include a first path P1 before turning around T and a second path P2 after the turning around T. Specifically, the first path P1 may be configured from the start of automatic parking to the point before the turning around T, and the second path P2 may be configured from the turning around T to the inside of a parking space S, that is, the end of the parking. That is, the parking path P may be configured with a series of the first path P1, turning around T, and second path P2. Thus, the vehicle 100 can continuously perform first driving along the first path P1, turning around, and second driving along the second path P2.

In addition, since the vehicle 100 has a considerable size, it may require enough space for the turning around T. For this reason, the first path P1 may be configured to steer or move the vehicle 100 somewhat away from the parking space S. In detail, since a sudden change in steering prevents safe driving of the vehicle 100, the steering may be adjusted continuously and slightly such that the vehicle 100 is gradually moved away from the parking space S as shown in the drawing. That is, the first path P1 may form a soft curved path at the front of the parking space S to move the vehicle 100 away from there. Since the vehicle 100 can secure sufficient space and distance to the parking space through the first path P1, that is, first driving, the vehicle 100 can be oriented to be aligned to the parking space S through the turning around T and second path P2, that is, second driving. In detail, the second path P2 may be configured to steer or move the vehicle close to the parking space S again by turning around the vehicle 100. As described above, to avoid the sudden change in the steering, the second path P2 may include a soft curved path. At the same time, the second path P2 may be configured such that the vehicle 100 is aligned with the parking space S. For example, the second path P2 may be configured such that a centerline of the parking space S in the length direction thereof and a centerline of the vehicle 100 in the length direction thereof are exactly matched with each other or at least parallel to each other. Finally, the second path P2 can be extended inside the parking space S such that the aligned vehicle 100 is located in the parking space S. Consequently, for the alignment and parking of the vehicle 100, the second path P2 includes steering opposite to that of the first path P1 as shown in the drawing. In addition, the vehicle 100 can move forward along the second path P2. That is, the vehicle 100 can be parked forward in the parking space S. On the contrary, the vehicle 100 can move backward along the second path P2, that is, it can be parked backward in the parking space S.

Moreover, to safely perform the intended parking, the driving along the configured path should be controlled or adjusted appropriately in the configuration step S21. For example, other detailed conditions such as the speed and steering of the vehicle 100 should be appropriately controlled to properly move the vehicle 100 along the configured path. Thus, as conditions for controlling driving along the configured path, the parking conditions may include the speed and steering of the vehicle 100. If necessary, other conditions may also be included as control conditions for driving (hereinafter referred to as "driving conditions"). For these reasons, in the configuration step S20, driving conditions such as the speed and steering of the vehicle 100 can be additionally set with respect to the configured path [S22].

Meanwhile, when the vehicle 100 senses that there is an object on the configured path while moving along the configured path, the safe driving cannot be guaranteed due to a collision probability between the vehicle 100 and object. As described above, when the automatic parking is started, the parking path is configured at least based on the environment included in a sensor sensing range through the sensing step S10. Thus, the detected object may be an object newly appearing on the configured path or in a nearby space. That is, for safe and efficient parking, the vehicle 100 needs to be controlled by considering a moving object, that is, by coping with changes in the environment. Specifically, when a moving object is detected, the vehicle 100 first senses movement characteristics of the moving object to control the automatic parking efficiently and safely [S30].

In the sensing step S30, the vehicle 100 can first sense a relative position of the object as the movement characteristics [S31]. For example, using its sensor, i.e., object detection unit 300, the vehicle 100 can sense whether the object is located at the front, back, or side of the vehicle 100. Next, the vehicle 100 can sense a movement direction of the object [S32]. By sensing the movement direction, the vehicle 100 can know whether the object approaches the vehicle 100. For example, the vehicle 100 may sense whether the object approaches or move away from the vehicle 100 from the relative position of the object by using the sensor. Further, the speed of the object is also important to determine whether the object will be located on the configured path of the vehicle 100. Thus, the vehicle 100 can also sense the movement speed of the object S33. Since the movement characteristics of the object are essentially required for automatic parking control where the moving object is considered, the movement characteristics can be continuously obtained from the start of the automatic parking (e.g., when the vehicle 100 arrives in the vicinity of the parking space) to the end of the automatic parking (e.g., when the vehicle 100 is parked in the parking space) through the sensing step S30.

The sensed characteristics can accurately define the movement of the object. Thus, the vehicle 100 expects a movement path of the object based on the sensed movement characteristics [S40]. Since the vehicle 100 can obtain relative positions of the object from the expected movement path while being driving on the configured path, the vehicle 100 can accurately determine the risk of the moving object, i.e., collision probability therebetween. To determine the movement path and risk more exactly, a steering rate and heading angle of the object may be further sensed as the movement characteristics in the sensing step S30.

Thereafter, based on the expected movement path, the vehicle 100 determines whether the object moving along the expected movement path interferes with the vehicle 100 moving for the automatic parking [S50]. That is, the vehicle 100 determines whether the object's movement along the expected path interferes with the vehicle 100's movement along the configured parking path. Further, the vehicle 100 may determine whether the object's position on the expected movement path interferes with its position on the parking path. Consequently, the vehicle 100 determines whether the expected movement path of the object interferes with the configured parking path of the vehicle. In detail, if the parking path and movement path are crossed, the collision probability between the vehicle 100 and object is increased. Thus, when it is determined that the parking path crosses with the object's movement path, the vehicle 100 determines that the object interferes with the vehicle 100. In addition, when the parking path is close to the movement path even though they are not crossed, if each of the vehicle 100 and object slightly changes its path and/or steering, the vehicle 100 may collide with the object. That is, when the parking path is partially close to the movement path, the vehicle 100 may collide with the object. Thus, when it is determined that the parking path is close to the movement path of the object, the vehicle 100 determines that the object interferes with the vehicle 100.

When it is determined that the detected object does not interfere with the vehicle 100, the vehicle 100 can perform the automatic parking according to the configured parking conditions [S60]. That is, the vehicle 100 can be driven along the configured parking path based on the driving conditions for the configured path, i.e., speed and steering, and for this driving action, the vehicle drive device 600 can be operated.

However, when it is determined that the detected object interferes with the vehicle 100, the vehicle 100 adjusts the configured parking conditions to avoid the object [S70]. In detail, either the parking path or driving conditions (i.e., speed, steering, etc.) can be adjusted, and if necessary, both the parking path and driving conditions can be adjusted. In addition, since if the vehicle 100 turns around, the vehicle 100 can be easily aligned with the parking space, the adjusted parking path may include at least one time of turning around. Thereafter, the vehicle 100 can perform the automatic parking according to the adjusted parking conditions [S80]. That is, the vehicle 100 can be parked according to the adjusted parking path and/or driving conditions without user's manipulation.

Meanwhile, a moving object can be detected before the configuration step S20. For example, the vehicle 100 may detect the moving object immediately after the arrival in the vicinity of the parking space S. In this case, the parking conditions may not need to be configured in the configuration step S20 and thus, the determination step S50 and following steps S60 to S80 may not need to be performed. Instead, the vehicle 100 can expect a path based on movement characteristics of the object and then initially configure the parking conditions for avoiding the object, i.e., path and speed/steering using the expected path.

Hereinafter, the automatic parking control method will be described in detail with reference to various examples of object movement characteristics. In this context, FIGs. 9 to 19 show movement characteristics of different types of moving objects and automatic parking control therefor in detail. Although these drawings illustrate vehicles that move in a different way as examples of the moving objects, the vehicles may be replaced with all moving objects including people or other transportation.

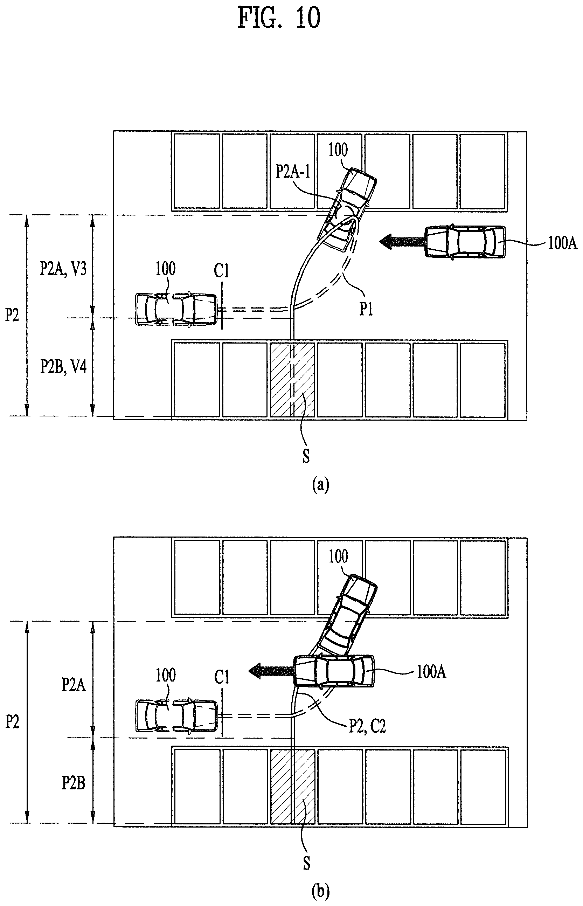

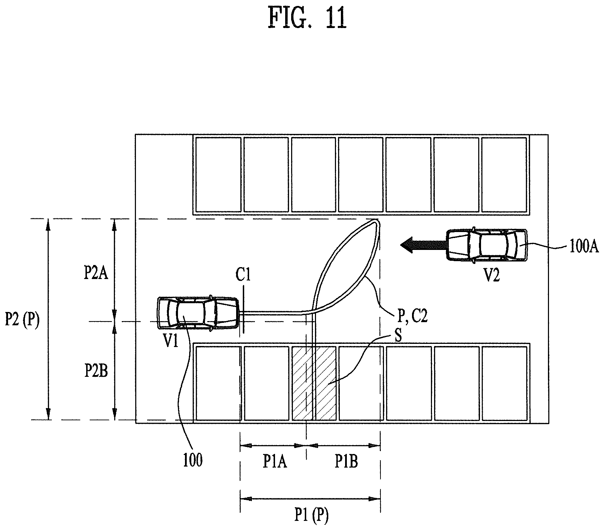

For example, an object that moves around the vehicle 100 performing the automatic parking may approach the vehicle 100 from the front. The automatic parking control for the moving object will be described with reference to the following drawings. FIG. 9 is a schematic diagram illustrating an example of vehicle parking control when an object approaches a vehicle from the front of the vehicle before the vehicle turns around, FIG. 10 is a schematic diagram illustrating an example of vehicle parking control when an object approaches a vehicle from the front of the vehicle after the vehicle turns around, and FIG. 11 is a schematic diagram illustrating another example of vehicle parking control when an object approaches a vehicle from the front of the vehicle.

First, referring to FIG. 9, while performing the automatic parking, the vehicle 100 can detect an object moving toward the vehicle 100 from the front of the vehicle 100, i.e., a different vehicle 100A [S30]. That is, the different vehicle 100A moves in a direction opposite to the driving direction of the vehicle 100, and thus it may be closer to the vehicle 100. As shown in FIG. 9, the vehicle 100 may detect the different vehicle 100A before turning around, that is, when starting to move along the first path P1 or while moving along the first path P1. In addition, before detecting the object, the vehicle 100 may configure the path P and parking conditions for the path P in the configuration step S20. When detecting the different vehicle 100A, the vehicle 100 may simultaneously obtain movement characteristics of the different vehicle 100A [S30]. In detail, the vehicle 100 may detect a relative position, movement direction, and movement speed of the different vehicle 100A. Moreover, the vehicle 100 may expect a movement path of the different vehicle 100A based on the sensed movement characteristics [S40].

As described above, according to the control method of the present invention, the parking path P may include at least one time of turning around, and such turning around requires enough space for orientation change and alignment of the vehicle 100. Thus, as shown in the drawing, the parking path P may include not only a space where the movement of the vehicle is allowed, i.e. the entirety of a lane but also a space out of the lane. Meanwhile, since the different vehicle 100A moves toward the vehicle 100 from the front of the vehicle 100, the expected path of the different vehicle 100A may be partially adjacent to the parking path P of the vehicle 100. For this reason, the vehicle 100A may determine that the different vehicle 100A that will move along the expected path interferes with the vehicle 100 that will move along the parking path.

Meanwhile, since the different vehicle 100A directly approaches the vehicle 100 from the front, a collision therebetween is highly likely to occur. To precisely control the automatic parking to cope with high- risk situations, the vehicle 100 additionally determines whether the expected path of the different vehicle 100A crosses with the parking path P of the vehicle 100. In detail, the vehicle 100 may determine whether positions of the different vehicle 100A overlap with those of the vehicle 100 on the parking path. That is, the vehicle 100 determines whether the vehicle 100 will encounter the object, which will move along the expected path. Based on the determination, the vehicle 100 adjusts the parking conditions, i.e., parking path P and/or driving conditions (e.g., speed, steering, etc.) [S70]. In other words, the vehicle 100 adjusts the configured parking conditions based on the determination of whether there will be interference, and then configures different parking conditions by determining whether there will be additional crossing points. The determination on whether the expected path and parking path P cross with each other may enable to determine the high collision probability between the vehicle 100 and different vehicle 100A. Thus, based on the determination on whether the crossing occurs, the parking conditions is adjusted according to the degree of collision probability, and thus the automatic parking can be controlled safely and efficiently. Such control based on whether crossing occurs will be described in detail with reference to the relevant drawings.

First, based on the sensed movement characteristics, the vehicle 100 determines that the expected path of the different vehicle 100A actually does not cross with the parking path P of the vehicle 100. That is, the vehicle 100 may determine that the positions of the different vehicle 100A on the expected path do not overlap with those of the vehicle 100 on the parking path P. In addition, the vehicle 100 determines that the vehicle 100 will not encounter the object, which will move along the expected path. That is, the vehicle 100 determines that the expected path of the different vehicle 100A is only close to the parking path P. In this case, the collision probability with the vehicle 100 and different vehicle 100A is low, and thus the vehicle 100 maintains the parking path P preconfigured in the configuration step S20 without any changes. Instead, to minimize the collision probability with the different vehicle 100A, the driving conditions, in particular, the speed of the vehicle 100 moving along the parking path P is adjusted [S70].

In detail, when it is determined that the expected path of the different vehicle 100A does not actually cross with the parking path P of the vehicle 100, the vehicle 100 can move toward the parking space S along the preconfigured parking path P, i.e., first and second paths P1 and P2 due to the relatively low collision probability as shown in FIG. 9(a). However, if the path or steering of the vehicle 100 or different vehicle 100A is slightly changed in some sections of the parking path P, which are close to the expected path of the different vehicle 100A, the vehicles 100 and 100A may collide. To avoid such a collision, a relatively large change in steering is required, and the vehicle 100 needs to maintain a low speed to change its steering stably. For this reason, the vehicle 100 may automatically reduce its speed in some sections of the parking path P, which are close to the expected path of the different vehicle 100A. That is, the speed in some sections close to the expected path may be set to be lower than those in other sections. As described above, due to the large space required for the turning around T, the first and second parking paths P1 and P2 may include sections P1B and P2A which cross lanes. Considering the orientation of the different vehicle 100 approaching from the front, these sections may be close to the path of the different vehicle 100A. Thus, the vehicle 100 may move in at least part of the sections P1B and P2A crossing the lanes at speeds lower than those in other sections. In addition, the sections P1B and P2A may include some sections P1B-1 and P2A-1 before and after the turning around, and in the partial sections P1B-1 and P2A-1, speed reduction may be required due to significant changes in the steering and orientation caused by the turning around. Thus, the speeds in the prescribed sections P1B-1 and P2A-1, which appears before and after the turning around, may be set to be lower than those in other sections due to not only the adjacency with the different vehicle 100A but also the significant changes in the steering/orientation. Since in the example of FIG. 9(a), the vehicle 100 senses the different vehicle 100A before being driven along the second path P2, the section P1B of the first path may be adjacent to the expected path of the different vehicle 100A, and thus the speed in at least part of the section P1B, for example, the speed in the section P1B-1 may be set to be lower than those in other sections. In addition, it is preferable that the vehicle 100 is oriented at a low speed so as to be accurately aligned with the parking space S after the turning around. Further, the section P2A of the second path P2 may also be adjacent to the expected path of the different vehicle 100A. Thus, the speed in at least part of the section P2A, which appears after the turning around, may be set to be lower than those in other sections.

According to the above-described speed configuration, the vehicle 100 can be driven for the automatic parking as follows. First, the vehicle 100 can be driven along the first path P1 before the turning around at a first speed V1. In detail, the first path P1 may include a first section P1A corresponding to a straight section before the change of the orientation by the turning around, and the vehicle 100 may pass through the first section P1A at the first speed V1. Since the steering change is not required in the first section P1A, the first speed V1 may be set to be higher than other speeds. In addition to the first section P1A, the first path P1 may include a second section P1B that crosses the lanes for the turning around. The second section P1B may be formed as a soft curved path to avoid a sudden change in the steering. As described above, since the second section P1B may be adjacent to the expected path of the different vehicle 100A, the vehicle 100 may pass through at least part of the section P1B at a second speed V2 lower than the first speed V1. In particular, the speed in the third section P1B-1, which is a partial section immediately before the turning around, can be set to the second speed V2. Meanwhile, even in the second section, the speed in some parts thereof which are not close to the expected path of the different vehicle 100A may be set to the first speed V1 rather than the second speed V2. Thereafter, the second path P2 may include a first section P2A that crosses the lanes to align the vehicle 100 with the parking space S after the turning around. Similar to the second section P1B of the first path P1, the first section P2A may be formed as a soft curved path to avoid a sudden change in the steering. As described above, since low speed is required in the first section P2A because it may be close to the expected path of the different vehicle 100A and the vehicle 100 needs to be aligned with the parking space S, the vehicle 100 may pass through at least part of the first section P2A at a third speed V2 lower than the first speed V1. In particular, the speed in a third section P2A-1 corresponding to a partial section immediately after the turning around may be set to the third speed V3. The first section P2A may allow the vehicle 100 to be aligned with the parking space S and can be extended to the entrance of the parking space S. In addition to the first section P2A, the second path P2 may include a second section P2B connected to the inside of the parking space S. Since the first section P2A allows the vehicle 100 to be aligned with the parking space S, the second section P2B may be a straight section where the steering is not changed until the inside of the parking space S. Thus, the vehicle 100 may pass through the second section P2B at a fourth speed V4 higher than the second and third speeds V2 and V3. For example, the vehicle 100 may move at the fourth speed V4 from the time when the vehicle 100 enters the parking space S. The movement at the fourth speed can offset delays due to the relatively low second and third speeds V2 and V3. Hence, when it is sensed that the different vehicle 100A approaches the vehicle 100 from the front, the vehicle 100 can be safely parked in the parking space S.

Next, the vehicle 100 may determine that the expected path of the different vehicle 100A actually crosses with the parking path P of the vehicle 100, based on the sensed movement characteristics. In this case, since the collision probability between the vehicle 100 and different vehicle 100A is relatively high, the parking should be controlled such that the safety of the vehicle 100 is maximized.

First, as shown in FIG. 9(b) (an example not being part of the present claims), when it is determined that the expected path of the different vehicle 100A is actually crossed with the parking path P of the vehicle 100, the vehicle 100 can control driving along the preconfigured parking path P, that is, its driving conditions in the configuration step S20 such that the difference vehicle 100A passes through the preconfigured parking path P in advance before the vehicle 100 moves along the preconfigured parking path P [S70]. Considering that the different vehicle 100A approaches from the front, the driving conditions of the vehicle 100 can be controlled such that the different vehicle 100A passes through the parking path P, in particular, the second section P1B of the first path and the first section P2A of the second path, which are formed across the lanes, in advance. In detail, the vehicle 100 can control its speed corresponding to one of the driving conditions such that different vehicle 100A passes through the parking path P in advance. For example, the vehicle 100 may reduce its speed so that the different vehicle 100A passes through the parking path P in advance. However, in this case, the collision probability with the different vehicle 100A may still exist due to the driving of the vehicle 100. Thus, the vehicle 100 may stop and wait [C1] until the different vehicle 100A completely passes through the parking path P. For safer parking, the vehicle 100 may stop and wait until the different vehicle 100A completely passes through the parking path P so that it is out of the sensor's range and thus not detected any more. In addition, since the collision probability between the vehicle 100 and different vehicle 100A is increased in the sections P1B and P2A formed across the lanes, it is preferable that the vehicle 100 stops before the second section P1B of the first path, that is, before the turning around in the example of FIG. 9(b) (which is not part of the present claims). After the different vehicle 100A passes through the parking path P, the vehicle 100 can be parked in the parking space S along the preconfigured path P [C2 and S80]. In summary, when the expected path of the different vehicle 100A actually crosses with the parking path of the vehicle 100, the vehicle 100 can safely perform the automatic parking by controlling the above-described driving conditions, that is, its speed.

Additionally, as shown in FIG. 9(c), when it is determined that the expected path of the different vehicle 100A actually crosses with the parking path P of the vehicle 100, the vehicle 100 may adjust the preconfigured parking path P in the configuration step S20 to avoid the different vehicle 100A. For the avoidance, the vehicle 100 may reconfigure the turning around point T of the parking path P such that the point is located at the back of the different vehicle 100A. In other words, the vehicle 100 may change or move the turning around point T to a new turning around point T', which is located behind the different vehicle 100A. Since the turning around point T may correspond to the end point of the first path P1 and the start point of the second path P2 as described above, it could be interpreted to mean that the end point or start point is reconfigured to be located behind the different vehicle 100A. That is, as shown in FIG. 9(c), a new path P' can be formed with reference to the new turning around point T'. Since the new turning around point T' is located behind the different vehicle 100A, the new path P' can be formed behind the different vehicle 100A such that the vehicle 100 detours the different vehicle 100A, and thus the vehicle 100 can avoid the collision with the different vehicle 100A. In detail, since the safe avoidance path P' can be formed with reference to the new turning around point T', the vehicle 100 can configure the new turning around point T' at any time from the time when the vehicle 100 senses the different vehicle 100A before the time when vehicle 100 encounters the different vehicle 100A. In other words, the vehicle 100 can reconfigure the turning around point T to be located at any position behind the different vehicle 100A at any time from the time when the vehicle 100 senses the different vehicle 100A before the time when vehicle 100 encounters the different vehicle 100A. However, for more stable avoidance, the vehicle 100 may use a position of the different vehicle 100A when the different vehicle 100A was detected in configuring the new turning around point T'. That is, the vehicle 100 may configure the new turning around point T' to be placed behind the position of the different vehicle 100A when it was detected. Since the different vehicle 100A currently approaches, the position of the different vehicle 100A when it was detected will be empty. Thus, the vehicle 100 can create the new parking path P' capable for guaranteeing the avoidance of the different vehicle 100A through the reconfiguration.

In addition, referring to FIG. 10, after turning around, that is, when starting to move along the second path P2, or while moving along the second path P2, the vehicle 100 can detect the different vehicle 100A approaching from the front [S30]. Similar to the examples of FIG. 9, when the different vehicle 100A is detected, the vehicle 100 can simultaneously detect movement characteristics of the different vehicle 100A [S30] and expect a movement path of the different vehicle 100A based on the sensed movement characteristics [S40]. In addition, for the same reason as described above, the vehicle 100 can determine that the different vehicle 100A interferes with the vehicle 100 [S50].

Further, the vehicle 100 additionally determines whether the expected path of the different vehicle 100A crosses with the parking path P of the vehicle 100 based on the collision probability between the vehicle 100 and different vehicle 100A. Based on the determination, the vehicle 100 adjusts the parking conditions, that is, parking path P and/or driving conditions (i.e., speed, steering, etc.) [S70]. Since such adjustment is generally equal to the adjustment performed when the different vehicle 100A is detected before the vehicle 100 turns around, which is described with reference to the examples of FIG. 9, only the features different from the control described with reference to FIG. 9 will be described.

First, as shown in FIG. 10(a), based on the sensed movement characteristics, the vehicle 100 may determine that the expected path of the different vehicle 100A actually does not cross with the parking path P of the vehicle 100. In this case, since the vehicle 100 has completed driving along the first path, the vehicle 100 maintains the preconfigured parking path P, i.e., the second path P2 without adjustment due to the relatively low collision probability. Instead, the vehicle adjusts its speed on the second path P2 [S70]. However, the vehicle 100 may automatically decrease the speed to avoid the collision with the different vehicle 100A in some sections of the parking path P close to the expected path of the different vehicle 100A. In detail, the vehicle 100 may pass through at least part of the first section P2A of the second path, which is adjacent to the expected path of the different vehicle 100A, at a speed lower than those in other sections. In particular, the speed in the third section P2A-1 appearing immediately after the turning around, where significant changes in the steering and orientation are required, may be set to be lower than those in other sections. Since details of the speed configuration on the second path P2 are the same as described with reference to FIG. 9(a), it will not be described herein to avoid redundant description.

Next, the vehicle 100 may determine that the expected path of the different vehicle 100A actually crosses with the parking path P of the vehicle 100, based on the sensed movement characteristics. In this case, as shown in FIG. 10(b) (an example not being part of the present claims), when it is determined that the expected path of the different vehicle 100A is actually crossed with the parking path P of the vehicle 100, the vehicle 100 can control driving along the path P, that is, its driving conditions such that the difference vehicle 100A passes through the parking path P in advance before the vehicle 100 moves along the preconfigured parking path P, that is, second path P2 [S70]. Considering that the different vehicle 100A approaches from the front, the driving conditions of the vehicle 100 can be controlled such that the different vehicle 100A passes through the parking path P, in particular, the first section P2A of the second path in advance. For example, the vehicle 100 can decrease its speed such that different vehicle 100A passes through the second path P2 in advance. Preferably, the vehicle 100 may stop and wait [C1] until the different vehicle 100A completely passes through the second path P2. For safer parking, the vehicle 100 may stop and wait until the different vehicle 100A completely passes through the second path P2 so that it is out of the sensor's range and thus not detected any more. In addition, to minimize the collision probability, it is preferable that the vehicle 100 stops before moving along the first section P2A of the second path. After the different vehicle 100A passes through the second path P2, the vehicle 100 can be parked in the parking space S along the preconfigured second path P2 [C2 and S80].

On the other hand, as an example outside the protection scope, when it is determined that the different vehicle 100A approaching from the front interferes with the vehicle 100, the vehicle adjusts the parking conditions, that is, parking path P and/or driving conditions (i.e., speed, steering, etc.) based on a movement speed of the different vehicle 100A to control the automatic parking mode safely, instead of determining whether the expected path of the different vehicle 100A crosses with the parking path P of the vehicle 100 [S70]. In particular, since when the speed of the different vehicle 100A is higher than that of the vehicle 100, the collision probability between the vehicle 100 and different vehicle 100A is significantly increased, the vehicle 100 should precisely control the automatic parking.

In detail, as shown in FIG. 11, before or after turning around, the vehicle 100 can detect the different vehicle 100A approaching the vehicle 100 from the front and movement characteristics of the different vehicle 100A and then expect the movement path of the different vehicle 100A based on the sensed movement characteristics [S30 and S40]. As described above, the vehicle 100 determines that the different vehicle 100A will at least interfere with the automatic parking of the vehicle 100 due to its movement characteristics [S50]. If it is sensed or determined that the speed V2 of the different vehicle 100A is higher than the speed V1 of the vehicle 100, the vehicle 100 may control driving along the path P, that is, its driving conditions, in particular, its speed such that the difference vehicle 100A passes through the parking path P in advance before the vehicle 100 moves along the preconfigured parking path P. In detail, the vehicle 100 may decrease its speed so that the different vehicle 100A can pass through the parking path P1 or P2 in advance. However, in this case, since the collision probability with the different vehicle 100A still exists, the vehicle 100 may stop and wait [C1] until the different vehicle 100A completely passes through the parking path P1 or P2. For safer parking, the vehicle 100 may stop and wait until the different vehicle 100A completely passes through the parking path P1 or P2 so that it is out of the sensor's range and thus not detected any more. In addition, since the collision probability between the vehicle 100 and different vehicle 100A is increased in the sections P1B and P2A formed across the lanes, it is preferable that the vehicle 100 stops before the second section P1B of the first path, that is, before the turning around. For the same reason, it is preferable that the vehicle 100 stops before the first section P2A of the second path, that is, after the turning around. After the different vehicle 100A completely passes through the parking path P1 or P2, the vehicle can be parking in the parking space S [C2 and S80]. In summary, when sensing that the different vehicle 100A approaches from the front, the vehicle 100 can safely perform the automatic parking by controlling the above-described driving conditions, that is, its speed based on speed comparison between the vehicle 100 and different vehicle 100A. On the contrary, when it is determined that the speed V2 of the different vehicle 100A is lower than the speed V1 of the vehicle 100, the collision probability may be decreased. However, in this case, since the expected path of the different vehicle 100A may cross with the parking path P of the vehicle 100, the control for the collision avoidance may be required. Thus, when the speed V2 of the different vehicle 100A is lower than the speed V1 of the vehicle 100, the control for the automatic parking described with reference to FIGs. 9 and 10 may be performed based on the determination on whether the expected path and parking path cross. Since details of the control are described above, it is omitted herein.

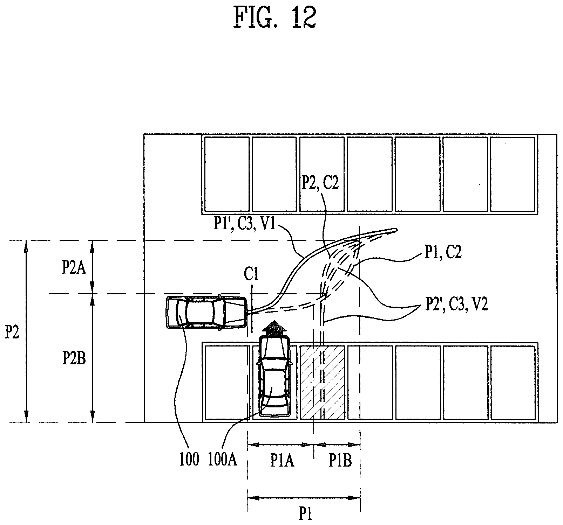

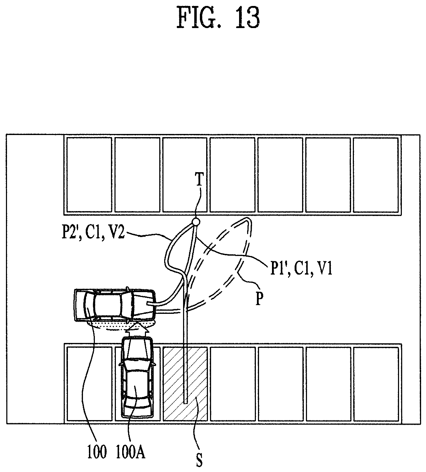

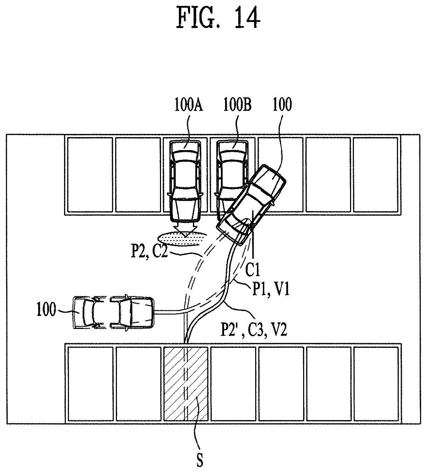

In addition to the examples of FIGs. 9 to 11, an object moving in the vicinity of the vehicle 100 performing the automatic parking may appear at the side of the vehicle 100. The automatic parking control for handling the moving object will be described with reference to the following drawings. FIG. 12 is a schematic diagram illustrating an example of vehicle parking control when an object appearing at the side of a vehicle passes in front of the vehicle in a direction crossing with a driving direction of the vehicle before the vehicle turns around, FIG. 13 is a schematic diagram illustrating an example of vehicle parking control when an object appearing at the side of a vehicle directly approaches the side of the vehicle before the vehicle turns around, and FIG. 14 is a schematic diagram illustrating an example of vehicle parking control when an object appears at the side of a vehicle after the vehicle turns around.

First, referring to FIGs. 12 and 13, while performing the automatic parking, the vehicle 100 can detect an object that approaches the vehicle 100 from the side of the vehicle 100, i.e., the different vehicle 100A [S30]. Before detecting the different vehicle 100A, the vehicle 100 may configure the path P and driving conditions therefor in the configuration step S20. In detail, as shown in FIG. 12, the different vehicle 100A may cross the driving path (i.e., parking path P) or driving direction of the vehicle 100 ahead of the vehicle 100. To be exact, the different vehicle 100A may pass ahead of the vehicle 100 in the direction crossing with the driving direction of the vehicle 100. On the other hand, as shown in FIG. 13, the different vehicle 100A may directly approach the side of the vehicle 100. To be exact, the different vehicle 100A may be oriented such that it directly crosses the driving path of the vehicle 100 starting from the side of the vehicle 100. That is, the different vehicle 100A may have a driving path that directly penetrates the side of the vehicle 100. As shown in the examples of FIGs. 12 and 13, the vehicle 100 may detect the different vehicle 100A before performing the turning around, that is, when starting to move along the first path P1 or while moving along the first path P1. When the different vehicle 100A is detected, the vehicle 100 can simultaneously detect movement characteristics of the different vehicle 100A [S30]. In detail, the vehicle 100 can detect a relative position, movement direction, and movement speed of the different vehicle 100A [S31 to S33]. In addition, based on the sensed movement characteristics, the vehicle 100 can expect a movement path of the different vehicle 100A [S40]. According to the control method of the present invention, the parking path may be formed across lanes, that is, over the entirety of the lanes due to the turning around T as described above. On the other hand, the different vehicle 100A may be oriented or driven such that it crosses the lanes from the side of the vehicle 100. Thus, the expected path of the different vehicle 100A may be partially adjacent to the parking path P of the vehicle 100, and thus the vehicle 100 may determine that the different vehicle 100A moving along the expected path interferes with the vehicle 100 moving along the parking path P [S50].

Meanwhile, referring to the example of FIG. 12, since the different vehicle 100A crosses the path P of the vehicle 100 ahead of the vehicle 100, a distance between the vehicle 100 and different vehicle 100A may be relatively long, and thus the collision probability is relatively low. On the contrary, referring to the example of FIG. 13, since the different vehicle 100A directly approaches the side of the vehicle 100, the distance between the vehicle 100 and different vehicle 100A may be relatively short, and thus the collision probability is relatively high. Thus, depending on positions of the different vehicle 100A, the distance between the vehicle 100 and different vehicle 100A and related risk may be changed. When sensing that the different vehicle 100A appears at the side of the vehicle 100, the vehicle 100 can determine or detect the distance therebetween, and then differently adjust the parking conditions, that is, parking path P and/or driving conditions (i.e., speed, steering, etc.) based on the distance [S70]. That is, the vehicle 100 may adjust the preconfigured parking conditions based on the determination on whether interference exists, and configure different parking conditions through the adjustment based on the additionally determined or detected distance. Thus, based on the distance between the vehicle 100 and different vehicle 100A, the parking conditions may be adjusted according to the degree of collision probability, and thus the automatic parking can be controlled safely and efficiently. Such control based on whether crossing occurs will be described in detail with reference to the relevant drawings.

First, as shown in FIG. 12, based on the sensed movement characteristics, the vehicle 100 may detect that the different vehicle 100A will cross ahead of the vehicle 100 in the direction crossing with the driving direction of the vehicle 100. That is, the vehicle 100 may determine that the distance between the vehicle 100 and different vehicle 100A is relatively long, and thus the collision probability is also relatively low. In addition, the vehicle 100 may have sufficient time and space for avoiding the different vehicle 100A. In this case, the vehicle 100 may immediately stop to minimize the collision probability [C1]. Similarly, to minimize the collision probability, it is preferable that the vehicle stops before the second section P1B of the first path that crosses the lanes. In addition, the vehicle 100 may stop and wait [C1] until the different vehicle 100A completely passes through the parking path P. For safer parking, the vehicle 100 may stop and wait [C1] until the different vehicle 100A completely passes through the parking path P so that it is out of the sensor's range and thus not detected any more. After the different vehicle 100A passes through the parking path P, the vehicle 100 can be parked in the parking space S along the preconfigured path P [C2 and S80]. Meanwhile, after the stop [C1], the vehicle 100 may sense that the different vehicle 100A does not move during a predetermined time. Although there are many reasons, the different vehicle 100A may stop and wait until the vehicle 100 will move by detecting the vehicle 100. Thus, if, while stopping [C1], the vehicle 100 senses that the different vehicle stops more than the predetermined time, the vehicle 100 may configure a new path P' (i.e., P1' and P2') for avoiding the different vehicle 100A and then be parked along the new path P1' and P2' [C3]. In the reconfiguration, the vehicle 100 can configure at least part of path P', in particular, a first path P1' such that it moves away from the different vehicle 100A. Since the different vehicle 100A approaches from the side of the vehicle 100 as described above, the first path P1', that is, at least part of the path P' may be configured such that the vehicle 100 moves away from the vehicle 100A, that is, penetrates a part of the lane opposite to the different vehicle 100A. For example, as shown in the drawing, when the different vehicle 100A approaches the side of the vehicle 100 from one side of the lane by moving out of a parking space, the first path P 1' may be configured by penetrating the other side of the lane, preferably, along the other side of the lane. By configuring the first path P1', the vehicle 100 can safely avoid the different vehicle 100A. Meanwhile, the new first path P1' may be configured to avoid the different vehicle 100A in advance, whereas a new second path P2' may be set to the shortest path to optimize the path configuration. Thus, if the different vehicle starts to move while the vehicle 100 is driven along the second path P2', the vehicle 100 should avoid the different vehicle 100A. To efficiently avoid the moving different vehicle 100A, the vehicle 100 needs to continuously monitor the different vehicle 100A and move at a relatively low speed. For this reason, when the vehicle moves along the first path P 1' at a first speed V 1', the vehicle may move along the second path P2' at a second speed V2' lower than the first speed V1'. That is, the second speed after the turning around may be set to be lower than the first speed before the turning around.

In addition, as shown in FIG. 13, based on the sensed movement characteristics, the vehicle 100 may sense that the different vehicle 100A directly approaches the side of the vehicle 100. That is, the vehicle 100 may determine that the distance between the vehicle 100 and different vehicle 100A is relatively short, and thus the collision probability is also relatively high. In this case, if the vehicle 100 stops or decrease its speed, the vehicle 100 may collide with the different vehicle 100A. For this reason, the vehicle 100 may configure a new path P' (i.e., P1' and P2') for avoiding the different vehicle 100A and then be parked along the new path P1' and P2' [C3] to actively minimize the collision probability. In the reconfiguration, the vehicle 100 can configure at least part of path P', in particular, a first path P1' such that it moves away from the different vehicle 100A, similar to the example of FIG. 12. Since the different vehicle 100A approaches from the side of the vehicle 100 as described above, the first path P1', that is, at least part of the path P' may be configured such that the vehicle 100 moves away from the vehicle 100A, that is, penetrates a part of the lane opposite to the different vehicle 100A. For example, as shown in the drawing, when the different vehicle 100A approaches the side of the vehicle 100 from one side of the lane by moving out of a parking space, the first path P1' may be configured by penetrating the other side of the lane. Meanwhile, if the first path P1' is set as a soft curved path, that is, does not include a sudden change in the steering, the vehicle 100 may fail to avoid the different vehicle 100A that directly approach from the side. Thus, as shown in FIG. 13, the first path P 1' may be configured such that the vehicle 100 rapidly moves away from the different vehicle 100A by crossing the lane in a direction perpendicular to the lane. That is, the new path P' may include a section where the vehicle 100 crosses the lane in the direction perpendicular to the lane. By configuring the first path P1', the vehicle 100 can safely avoid the different vehicle 100A. Meanwhile, the new first path P1' may be configured to avoid the different vehicle 100A in advance, whereas a new second path P2' may be set to the shortest path to optimize the path configuration. Since the different vehicle 100A is still being driven, the vehicle 100 should continuously monitor the different vehicle 100A and move at a relatively low speed to efficiently avoid the different vehicle 100A. For this reason, when the vehicle moves along the first path P1' at a first speed V1', the vehicle may move along the second path P2' at a second speed V2' lower than the first speed V1'. That is, the second speed after the turning around may be set to be lower than the first speed before the turning around.

Moreover, referring to FIG. 14, after turning around, that is, when starting to move along the first path P2 or while moving along the first path P2, the vehicle 100 can sense that the different vehicle 100A appears at the side of the vehicle 100 [S30]. Similar to the examples of FIGs. 12 and 13, when the different vehicle 100A is detected, the vehicle 100 can simultaneously sense movement characteristics of the different vehicle 100A [S30], and expect a movement path of the different vehicle 100A based on the sensed movement characteristics [S40]. In addition, the vehicle 100 can determine that the different vehicle 100A interferes approaching from the side interferes with the vehicle 100A [S50]. In addition, similar to the examples of FIGs. 12 and 13, when the vehicle 100 senses the different vehicle 100A appearing at the side even after turning around, the vehicle 100 can determine or detect a distance therebetween, and then differently adjust the parking conditions, that is, parking path P and/or driving conditions (i.e., speed, steering, etc.) based on the distance [S70]. Such adjustment is generally equal to the adjustment performed when the different vehicle 100A is detected before the vehicle 100 turns around, which is described with reference to the examples of FIGs. 12 and 13.

First, after turning around, the vehicle 100 may sense that the different vehicle 100A will cross ahead of the vehicle 100 in a direction overlapping with the driving direction of the vehicle 100 based on the sensed movement characteristics. In this case, the vehicle 100 may immediately stop to minimize the collision probability [C1]. In addition, since the vehicle 100 was already driven along the first path P1, the vehicle may stop and wait [C1] until the different vehicle 100A completely passes through the second path P2. For safer parking, the vehicle 100 may stop and wait [C1] until the different vehicle 100A completely passes through the parking path P, that is, second path P2 so that it is out of the sensor's range and thus not detected any more. After the different vehicle 100A passes through second path P2, the vehicle 100 can be parked in the parking space S along the second path P2 [C2 and S80]. Meanwhile, after the stop [C1], the vehicle 100 may sense that the different vehicle 100A does not move during a predetermined time. if, while stopping [C1], the vehicle 100 senses that the different vehicle stops more than the predetermined time, the vehicle 100 may configure a new path P2' for avoiding the different vehicle 100A and then be parked along the new path P2' [C3]. In the reconfiguration, the vehicle 100 can configure at least part of path P', in particular, a second path P2' such that it moves away from the different vehicle 100A. Since the different vehicle 100A approaches from the side of the vehicle 100, the second path P2', that is, at least part of the path P' may be configured such that the vehicle 100 moves away from the vehicle 100A, that is, penetrates a part of the lane opposite to the different vehicle 100A. Meanwhile, the new second path P2' may be set to the shortest path to optimize the path configuration. Thus, while the vehicle 100 is driven along the second path P2', the vehicle 100 needs to continuously monitor the different vehicle 100A and move at a relatively low speed to efficiently avoid the different vehicle 100A. For this reason, when the vehicle moves along the first path P1 at the first speed V1, the vehicle may move along the second path P2' at a second speed V2' lower than the first speed V1.

In addition, after turning around, the vehicle may sense that a different vehicle 100B directly approaches the side of the vehicle 100 based on the sensed movement characteristics. For this reason, the vehicle 100 may configure a new path P2' for avoiding the different vehicle 100B and then be parked along the new path P2' [C3] to actively minimize the collision probability. As described above with reference to FIG. 13, the second path P2' may be configured such that the vehicle 100 rapidly moves away from the different vehicle 100B by crossing the lane in a direction perpendicular to the lane. That is, the new path P' may include a section where the vehicle 100 crosses the lane in the direction perpendicular to the lane. Moreover, to efficiently avoid the different vehicle 100B, when the vehicle moves along the first path P1 at the first speed V1, the vehicle may move along the second path P2' at a second speed V2' lower than the first speed V1 as described above in FIG. 13.

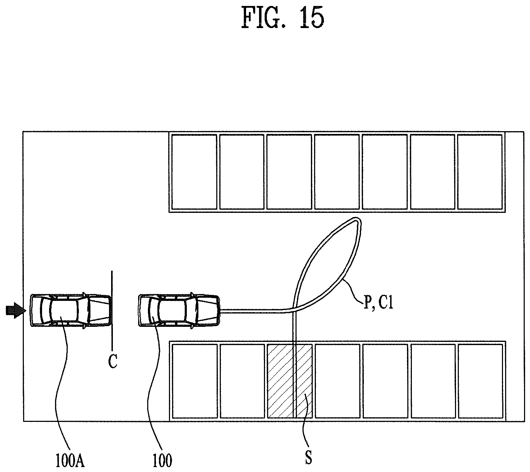

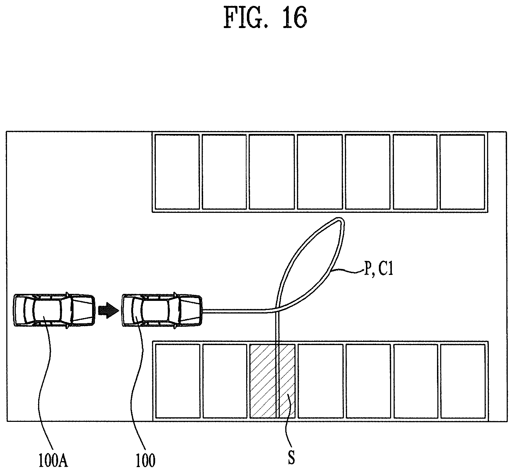

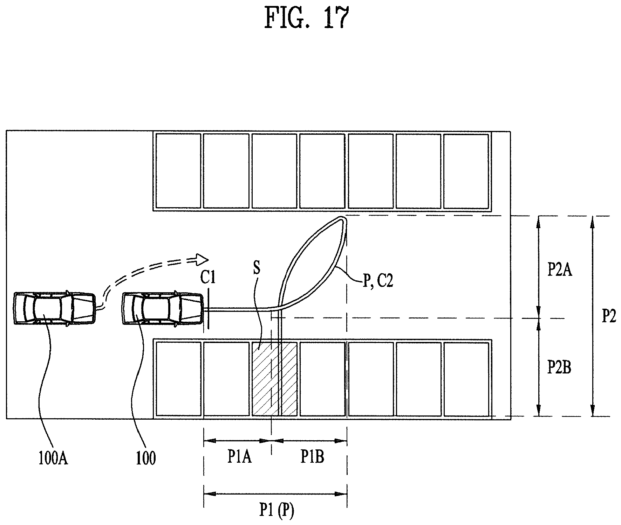

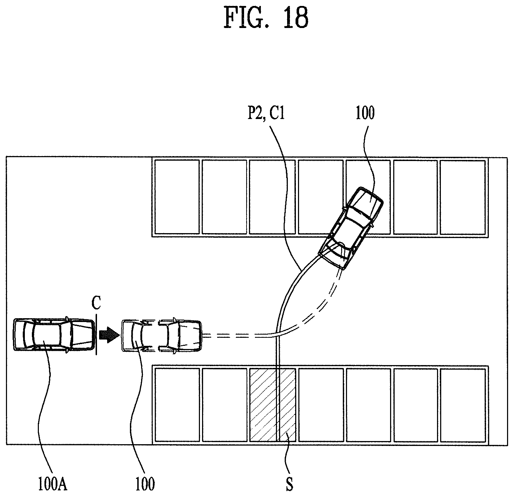

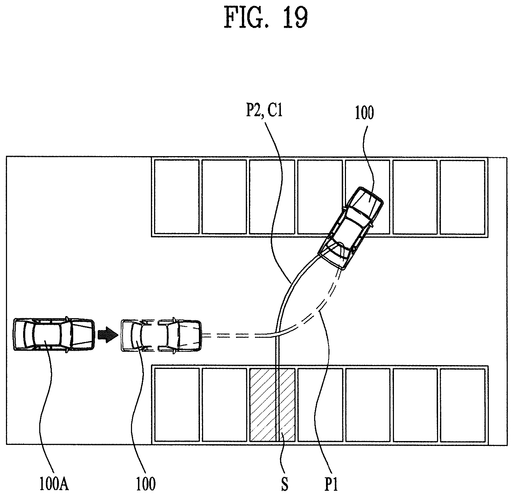

In addition to the examples of FIGs. 9 to 14, an object moving in the vicinity of the vehicle 100 performing the automatic parking may appear at the back of the vehicle 100. The automatic parking control for handling the moving object will be described with reference to the following drawings. FIG. 15 is a schematic diagram illustrating an example of vehicle parking control when an object approaches a vehicle from the back of the vehicle and then stops before the vehicle turns around, FIG. 16 is a schematic diagram illustrating an example of vehicle parking control when an object continuously approaches a vehicle from the back of the vehicle before the vehicle turns around, FIG. 17 is a schematic diagram illustrating an example of vehicle parking control when an object approaches a vehicle from the back of the vehicle and passes by the side of the vehicle before the vehicle turns around, FIG. 18 is a schematic diagram illustrating an example of vehicle parking control when an object approaches a vehicle from the back of the vehicle and then stops after the vehicle turns around, and FIG. 19 is a schematic diagram illustrating an example of vehicle parking control when an object continuously approaches a vehicle from the back of the vehicle after the vehicle turns around.

First, referring to FIGs. 15 to 17, while performing the automatic parking, the vehicle 100 can sense an object approaching the vehicle 100 from the back of the vehicle 100, i.e., the different vehicle 100A [S30]. That is, the different vehicle 100A moves along the same lane or space in the same direction as the driving direction of the vehicle 100, and thus may be closer to the vehicle 100. As shown in the examples of FIGs. 15 to 17, the vehicle 100 may sense the different vehicle 100A before turning around, that is, when starting to move along the first path P1 or while moving along the first path P1. Before the detection, the vehicle 100 may configure the path P and driving conditions therefor in the configuration step S20. When the different vehicle 100A is detected, the vehicle 100 can simultaneously sense movement characteristics of the different vehicle 100A [S30] and expect a movement path of the different vehicle 100A based on the sensed movement characteristics [S40]. In addition, for the same reason as in the example of FIG. 9 where the different vehicle 100A approaches from the front, the expected path of the different vehicle 100A may be partially adjacent to the parking path P of the vehicle 100, and thus the vehicle 100 may determine that the different vehicle 100A moving along the expected path interferes with the vehicle 100 moving along the parking path P [S50]. Thus, when sensing that the different vehicle 100A appears at the back of the vehicle 100, the vehicle 100 can differently adjust the parking conditions, that is, parking path P and/or driving conditions (i.e., speed, steering, etc.) [S70].

First, as shown in FIG. 15, the vehicle 100 may senses that the different vehicle 100A approaches and then stops at the back of the vehicle 100 based on the sensed movement characteristics. That is, the vehicle 100 may determine that a distance between the vehicle 100 and different vehicle 100A is long and continuously increased, and thus the collision probability is low. In this case, the vehicle 100 can move along the path P preconfigured in the configuration step S20 and then perform the parking [C1]. Meanwhile, since the different vehicle 100A may start to move at any time, it is preferable that the vehicle 100 completes the parking as soon as possible. For this reason, the vehicle 100 can move along the path P at a speed higher than that preconfigured in the configuration step S20. In detail, the vehicle 100 may move at a speed higher than that configured before the different vehicle 100A is detected.

Next, as shown in FIG. 16, the vehicle 100 may sense that the different vehicle 100A continuously approaches from the back of the vehicle 100 based on the sensed movement characteristics. In this case, since the vehicle 100 is still far away from the different vehicle 100A by a considerable distance, the vehicle 100 can move along the path P preconfigured in the configuration step S20 and then perform the parking [C1]. However, since the different vehicle 100A continuously moves unlike the example of FIG. 15, it is preferred that the vehicle moves at a relatively low speed to efficiently monitor and avoid the different vehicle 100A. For this reason, the vehicle 100 can move along the path P at a speed lower than that preconfigured in the configuration step S20. In detail, the vehicle 100 may move at a speed lower than that configured before the different vehicle 100A is detected.

In addition, as shown in FIG. 17, the vehicle 100 may sense that the different vehicle 100A approaches from th back side and changes its steering to pass by the side of the vehicle. In this case, the different vehicle 100A is very likely to have intention to overtake the vehicle 100, and thus if the vehicle 100 moves along the parking path P, the vehicle 100 may collide with the different vehicle 100A. For this reason, the vehicle 100 may immediately stop [C1] to minimize the collision probability. Similarly, it is preferable that the vehicle 100 stops at least before the second section P1B of the first path that crosses the lanes to minimize the collision probability. In addition, the vehicle 100 may stop and wait [C1] until the different vehicle 100A completely passes through the parking path P. For more safe parking, the vehicle 100 may stop and wait [C1] until the different vehicle 100A completely passes through the parking path P so that it is out of the sensor's range and thus not detected any more. After the different vehicle 100A passes through the parking path P, the vehicle 100 can be parked in the parking space S along the preconfigured path P [C2 and S80].

Moreover, referring to FIGs. 18 and 19, after turning around, that is, when starting to move along the second path P2, or while moving along the second path P2, the vehicle 100 can sense that the different vehicle 100A appears at the back of the vehicle 100. Similar to the examples of FIGs. 15 to 17, when the different vehicle 100A is detected, the vehicle 100 can simultaneously sense movement characteristics of the different vehicle 100A [S30] and expect a movement path of the different vehicle 100A based on the sensed movement characteristics [S40]. In addition, as described above, the vehicle 100 can determine that the different vehicle 100A approaching from the back interferes with the vehicle 100 [S50]. Thus, the vehicle 100 can differently adjust the parking conditions, that is, parking path P and/or driving conditions (i.e., speed, steering, etc.) [S70].

In detail, as shown in FIG. 18, after turning around, the vehicle 100 may sense that the different vehicle 100A approaches from the back and stops [C]. That is, the vehicle 100 may determine that a distance between the vehicle 100 and different vehicle 100A is relatively long, and thus the collision probability is also relatively low. In this case, since the vehicle 100 was already driven along the first path P1, the vehicle may perform the parking [C1] by moving along the path preconfigured in the configuration step S20, that is, the remaining second path P2. Meanwhile, since the different vehicle 100A may start to move at any time, it is preferable that the vehicle 100 completes the parking as soon as possible. For this reason, the vehicle 100 can move along the path P, i.e., second path P2 at a speed higher than that preconfigured in the configuration step S20. In detail, the vehicle 100 may move at a speed higher than that configured before the different vehicle 100A is detected.

In addition, as shown in FIG. 19, after turning around, the vehicle 100 may sense that the different vehicle 100 continuously approaches the vehicle 100 from the back. In this case, since the vehicle 100 is still far away from the different vehicle 100A by a considerable distance, the vehicle 100 can move along the path P preconfigured in the configuration step S20, that is, the second path P2 and then perform the parking [C1]. However, since the different vehicle 100A continuously move, it is preferred that the vehicle moves at a relatively low speed to efficiently avoid the different vehicle 100A. For this reason, the vehicle 100 can move along the path P, i.e., the second path P2 at a speed lower than that preconfigured in the configuration step S20. In detail, the vehicle 100 may move at a speed lower than that configured before the different vehicle 100A is detected.

The automatic parking device and method for controlling the same according to the present invention has the following effects and features.

According to the automatic parking device and method for controlling the same proposed in the present invention, a vehicle senses movement characteristics of an approaching object and expects a movement path of the object based on the sensed movement characteristics during parking. In addition, the vehicle determines whether the object interferes with the parking of the vehicle by using the expected path, and based on the determination, the vehicle adjusts parking conditions, i.e., a parking path and conditions for moving along the parking path. Therefore, according to the vehicle and control method for the same of the present disclosure, it is possible to precisely control vehicle driving for automatic parking by coping with changing environments and conditions in an active manner. For this reason, according to the vehicle for the same of the present disclosure, it is possible to achieve autonomous parking which is more efficient and safer than manual parking by a user.

It will be appreciated by persons skilled in the art that the effects that can be achieved through the present invention are not limited to what has been particularly described hereinabove and other advantages of the present invention will be more clearly understood from the following appended claims.

Implementations described above may be implemented as computer-readable code on a program-recorded medium. The computer-readable medium may include one or more recording devices in which data readable by a computer system may be stored. Examples of the computer-readable medium include a hard disk drive (HDD), solid-state disk (SSD), silicon disk drive (SDD), ROM, RAM, CD-ROM, magnetic tape, floppy disk, and optical data storage. Alternatively, implementations may be implemented in the form of a carrier wave (e.g., transmission over the Internet). In addition, the computer may include the processor 270 or the controller 170.

## Claims

1. An automatic parking device, comprising:
a sensor (300) configured to sense a surrounding environment of a vehicle (100); and
a control device (170) configured to:
configure a parking path (P) and steering and speed on the parking path (P) using the sensed surrounding environment in advance;
sense movement characteristics of an object detected in the vicinity of the vehicle (100);
expect a movement path of the object in consideration of the sensed movement characteristics; and
when it is determined that the object to move along the expected movement path will interfere with the vehicle (100) to move for parking, adjust the configured parking path (P) of the vehicle (100) and/or driving on the configured parking path (P) to avoid the object;
**characterized in that**
when it is sensed that the object approaches the vehicle (100) from the front of the vehicle (100), the control device (170) is configured to differently adjust the configured parking path (P) and the driving on the parking path (P) based on whether the expected movement path of the object crosses with the configured parking path (P) of the vehicle (100),
wherein the control device (170) is configured to:
when it is determined that the expected movement path of the object approaching from the front of the vehicle (100) crosses with the configured parking path (P) of the vehicle (100), adjust the configured parking path (P) to avoid the object, and
when it is determined that the expected movement path of the object approaching from the front of the vehicle (100) does not cross with the configured parking path (P) of the vehicle (100) but is close to the configured parking path (P), drive the vehicle (100) along the configured parking path (P) and adjust the speed of the vehicle (100) to minimize a probability of collision with the object.

2. The automatic parking device of claim 1, wherein the movement characteristics comprise a relative position of the object, a movement direction of the object, and a movement speed of the object,
wherein the configured parking path (P) comprises at least one time of turning around, and
wherein the control device (170) is configured to adjust speed and steering of the vehicle (100) to control the driving on the configured parking path (P).

3. The automatic parking device of claim 1, wherein when it is determined that the expected movement path of the object approaching from the front of the vehicle (100) crosses with the configured parking path (P) of the vehicle (100), the control device (170) is configured to reconfigure a turning around point of the vehicle (100) to be located behind the object.

4. The automatic parking device of claim 1, wherein when it is determined that the expected movement path of the object approaching from the front of the vehicle (100) does not cross with the configured parking path (P) of the vehicle (100), the control device (170) is configured to:
drive the vehicle (100) along the configured parking path (P); and
drive the vehicle (100) in some sections of the configured parking path (P), which are adjacent to the expected movement path of the object, at a speed lower than those in other sections of the configured parking path (P).

5. The automatic parking device of claim 4, wherein the control device (170) is configured to drive the vehicle (100) in at least part of a section of the configured parking path (P), which crosses lanes, at the speed lower than those in other sections of the configured parking path (P).

6. The automatic parking device of claim 4, wherein the control device (170) is configured to include a turning around in the configured parking path (P), and
wherein the control device (170) is configured to:
before the vehicle (100) turns around, drive the vehicle (100) at a first speed (V1); and
drive the vehicle (100) in the sections of the configured parking path (P), which are adjacent to the expected movement path of the object, at a second speed (V2) lower than the first speed (V1), and
wherein the control device (170) is further configured to:
after the vehicle (100) turns around, drive the vehicle (100) at a third speed lower than the first speed (V1); and
when the vehicle (100) is aligned with a parking space (S), drive the vehicle (100) at a fourth speed (V4) higher than the second and third speeds (V2, V3).

7. The automatic parking device of any one of claims 1 to 6, wherein when it is sensed that the object approaches the vehicle (100) from the side of the vehicle (100), the control device (170) is configured to differently adjust configured the parking path (P) and the driving on the configured parking path (P) based on a distance between the object and the vehicle (100).

8. The automatic parking device of claim 7, wherein when it is sensed that the object passes in front of the vehicle (100) in a direction crossed with a driving direction of the vehicle (100), the control device (170) is configured to:
stop the vehicle (100); and
after the object passes through the configured parking path (P), drive the vehicle along the configured parking path (P), and
wherein if the object does not move during a predetermined time or more after the vehicle (100) stops, the control device (170) is further configured to reconfigure the configured parking path (P) to avoid the object.

9. The automatic parking device of claim 7 or 8, wherein when it is sensed that the object directly approaches the side of the vehicle (100), the control device (170) is configured to reconfigure the configured parking path (P) to avoid the object.

10. The automatic parking device of claim 8 or 9, wherein after the vehicle (100) turns around, the control device (170) is configured to drive the vehicle (100) at a second speed (V2) lower than a first speed (V1) corresponding to a speed before turning around.

## Patentansprüche

1. Automatische Parkvorrichtung, aufweisend:
einen Sensor (300), der konfiguriert ist, eine Umgebung eines Fahrzeugs (100) zu erfassen; und
eine Steuervorrichtung (170), die konfiguriert ist:
einen Einparkweg (P) sowie Lenkung und Geschwindigkeit auf dem Einparkweg (P) vermittels der erfassten Umgebung vorab zu konfigurieren;
Bewegungseigenschaften eines in der Nähe des Fahrzeugs (100) erfassten Objekts zu erfassen;
einen Bewegungsweg des Objekts unter Berücksichtigung der erfassten Bewegungseigenschaften vorherzusagen; und
wenn festgestellt wird, dass das entlang des vorhergesagten Bewegungswegs zu bewegende Objekt das Fahrzeug (100) bei der Bewegung des Einparkens stören wird, den konfigurierten Einparkweg (P) des Fahrzeugs (100) und/oder Fahren auf dem Einparkweg (P) anzupassen, um dem Objekt auszuweichen,
**dadurch gekennzeichnet, dass**
wenn erfasst wird, dass sich das Objekt dem Fahrzeug (100) von der Vorderseite des Fahrzeugs (100) nähert, die Steuervorrichtung (170) konfiguriert ist, den konfigurierten Einparkweg (P) und das Fahren auf dem Einparkweg (P) basierend darauf anders einzustellen, ob der vorhergesagte Bewegungsweg des Objekts den konfigurierten Einparkweg (P) des Fahrzeugs (100) kreuzt,
wobei die Steuervorrichtung (170) konfiguriert ist, um:
wenn festgestellt wird, dass sich der vorhergesagte Bewegungsweg des Objekts, das sich dem Fahrzeug (100) von der Vorderseite nähert, mit dem konfigurierten Einparkweg (P) des Fahrzeugs (100) kreuzt, den konfigurierten Einparkweg (P) anzupassen, um dem Objekt auszuweichen, und
wenn festgestellt wird, dass sich der vorhergesagte Bewegungsweg des Objekts, das sich dem Fahrzeug (100) von der Vorderseite nähert, nicht mit dem konfigurierten Einparkweg (P) des Fahrzeugs (100) kreuzt, aber nahe an dem konfigurierten Einparkweg (P) ist, das Fahrzeug (100) entlang des konfigurierten Einparkwegs (P) zu fahren und die Geschwindigkeit des Fahrzeug (100) anzupassen, um eine Wahrscheinlichkeit einer Kollision mit dem Objekt zu minimieren.

2. Automatische Parkvorrichtung nach Anspruch 1, wobei die Bewegungseigenschaften eine relative Position des Objekts, eine Bewegungsrichtung des Objekts und eine Bewegungsgeschwindigkeit des Objekts umfassen,
wobei der konfigurierte Einparkweg (P) zumindest einen Wendezeitpunkt umfasst, und
wobei die Steuervorrichtung (170) konfiguriert ist, Geschwindigkeit und Lenkung des Fahrzeugs (100) einzustellen, um das Fahren auf dem konfigurierten Einparkweg (P) zu steuern.

3. Automatische Parkvorrichtung nach Anspruch 1, wobei, wenn bestimmt wird, dass der vorhergesagte Bewegungsweg des Objekts, das sich dem Fahrzeug (100) von der Vorderseite nähert, den konfigurierten Einparkweg (P) des Fahrzeugs (100) kreuzt, die Steuervorrichtung (170) konfiguriert ist, einen Wendepunkt des Fahrzeugs (100) dahingehend zu rekonfigurieren, dass dieser hinter dem Objekt liegt.

4. Automatische Parkvorrichtung nach Anspruch 1, wobei, wenn bestimmt wird, dass der vorhergesagte Bewegungsweg des Objekts, das sich dem Fahrzeug (100) von der Vorderseite nähert, den Einparkweg (P) des Fahrzeugs (100) nicht kreuzt, die Steuervorrichtung (170) konfiguriert ist, um:
das Fahrzeugs (100) entlang des konfigurierten Einparkwegs (P) zu fahren; und
das Fahrzeug (100) in manchen Abschnitten des Einparkwegs (P), welche an die vorhergesagte Bewegungsbahn des Objekts angrenzen, mit einer geringeren Geschwindigkeit als in anderen Abschnitten des konfigurierten Einparkwegs (P) zu fahren.

5. Automatische Parkvorrichtung nach Anspruch 4, wobei die Steuervorrichtung (170) konfiguriert ist, das Fahrzeug (100) in zumindest einem Teil eines Abschnitts des Einparkwegs (P), der Fahrbahnen kreuzt, mit der Geschwindigkeit zu fahren, die niedriger ist als jene in anderen Abschnitten des konfigurierten Einparkwegs (P).

6. Automatische Parkvorrichtung nach Anspruch 4, wobei die Steuervorrichtung (170) konfiguriert ist, ein Wenden in den konfigurierten Einparkweg (P) aufzunehmen, und wobei die Steuervorrichtung (170) konfiguriert ist:
bevor das Fahrzeug (100) umdreht, das Fahrzeug (100) mit einer ersten Geschwindigkeit (V1) zu fahren; und
das Fahrzeug (100) in den Abschnitten des Einparkwegs (P), die an den vorhergesagten Bewegungsweg des Objekts angrenzen, mit einer zweiten Geschwindigkeit (V2) zu fahren, die niedriger ist als die erste Geschwindigkeit (V1), und
wobei die Steuervorrichtung (170) ferner konfiguriert ist, um:
nachdem das Fahrzeug (100) umdreht, das Fahrzeug (100) mit einer dritten Geschwindigkeit zu fahren, die niedriger als die erste Geschwindigkeit (V1) ist; und
wenn das Fahrzeug (100) mit einer Parklücke (S) ausgerichtet ist, das Fahrzeug (100) mit einer vierten Geschwindigkeit (V4) zu fahren, die höher ist als die zweite und die dritte Geschwindigkeit (V2, V3).

7. Automatische Parkvorrichtung nach einem der Ansprüche 1 bis 6, wobei, wenn erfasst wird, dass sich das Objekt dem Fahrzeug (100) von der Seite des Fahrzeugs (100) nähert, die Steuervorrichtung (170) konfiguriert ist, den konfigurierten Einparkweg (P) und das Fahren auf dem Einparkweg (P) basierend auf einem Abstand zwischen dem Objekt und dem Fahrzeug (100) anders einzustellen.

8. Automatische Parkvorrichtung nach Anspruch 7, wobei, wenn erfasst wird, dass das Objekt vor dem Fahrzeug (100) in einer Richtung passiert, die sich mit einer Fahrtrichtung des Fahrzeugs (100) schneidet, die Steuervorrichtung (170) konfiguriert ist, um:
das Fahrzeug (100) zu stoppen; und
nachdem das Objekt den konfigurierten Einparkweg (P) passiert hat, das Fahrzeug entlang des Einparkwegs (P) zu fahren, und
wobei, falls sich das Objekt während einer vorbestimmten Zeit oder mehr, nachdem das Fahrzeug (100) stoppt, nicht bewegt, die Steuervorrichtung (170) ferner konfiguriert ist, den Einparkweg (P) zu rekonfigurieren, um dem Objekt auszuweichen.

9. Automatische Parkvorrichtung nach Anspruch 7 oder 8, wobei, wenn erfasst wird, dass sich das Objekt direkt der Seite des Fahrzeugs (100) nähert, die Steuervorrichtung (170) konfiguriert ist, den Einparkweg (P) zu rekonfigurieren, um dem Objekt auszuweichen.

10. Automatische Parkvorrichtung nach Anspruch 8 oder 9, wobei, nachdem das Fahrzeug (100) umgedreht hat, die Steuervorrichtung (170) konfiguriert ist, das Fahrzeug (100) mit einer zweiten Geschwindigkeit (V2) zu fahren, die niedriger als eine erste Geschwindigkeit (V1) ist, die einer Geschwindigkeit vor dem Wenden entspricht.

## Revendications

1. Dispositif de stationnement automatique, comprenant :
un capteur (300) configuré pour détecter un environnement ambiant d'un véhicule (100) ; et
un dispositif de commande (170) configuré pour :
configurer un trajet de stationnement (P) et une direction et une vitesse sur le trajet de stationnement (P) en utilisant l'environnement ambiant détecté à l'avance ;
détecter des caractéristiques de déplacement d'un objet détecté à proximité du véhicule (100) ;
prévoir un trajet de déplacement de l'objet en prenant en compte les caractéristiques de déplacement détectées ; et
lorsqu'il est déterminé que l'objet à déplacer le long du trajet de déplacement prévu gênera le véhicule (100) à déplacer pour le stationnement, ajuster le trajet de stationnement (P) configuré du véhicule (100) et/ou conduire sur le trajet de stationnement (P) configuré pour éviter l'objet,
**caractérisé en ce que**
lorsqu'il est détecté que l'objet approche le véhicule (100) depuis l'avant du véhicule (100), le dispositif de commande (170) est configuré pour ajuster différemment le trajet de stationnement (P) configuré et la conduite sur le trajet de conduite (P) selon si le trajet de déplacement prévu de l'objet croise le trajet de stationnement (P) configuré du véhicule (100),
dans lequel le dispositif de commande (170) est configuré pour :
s'il est déterminé que le trajet de déplacement prévu de l'objet approchant depuis l'avant du véhicule (100) croise le trajet de stationnement (P) configuré du véhicule (100), ajuster le trajet de stationnement (P) configuré pour éviter l'objet, et
s'il est déterminé que le trajet de déplacement prévu de l'objet approchant depuis l'avant du véhicule (100) ne croise pas le trajet de stationnement (P) configuré du véhicule (100) mais est proche du trajet de stationnement (P) configuré, conduire le véhicule (100) le long du trajet de stationnement (P) configuré et ajuster la vitesse du véhicule (100) pour minimiser une probabilité de collision avec l'objet.

2. Dispositif de stationnement automatique selon la revendication 1, dans lequel les caractéristiques de déplacement comprennent une position relative de l'objet, une direction de déplacement de l'objet et une vitesse de déplacement de l'objet,
dans lequel le trajet de stationnement (P) configuré comprend au moins une heure pour faire demi-tour, et
dans lequel le dispositif de commande (170) est configuré pour ajuster la vitesse et la direction du véhicule (100) pour commander la conduite sur le trajet de stationnement (P) configuré.

3. Dispositif de stationnement automatique selon la revendication 1, dans lequel, lorsqu'il est déterminé que le trajet de déplacement prévu de l'objet approchant depuis l'avant du véhicule (100) croise le trajet de stationnement (P) prévu du véhicule (100), le dispositif de commande (170) est configuré pour reconfigurer un point de demi-tour du véhicule (100) à situer à l'arrière de l'objet.

4. Dispositif de stationnement automatique selon la revendication 1, dans lequel, lorsqu'il est déterminé que le trajet de déplacement prévu de l'objet approchant depuis l'avant du véhicule (100) ne croise pas le trajet de stationnement (P) configuré du véhicule (100), le dispositif de commande (170) est configuré pour :
conduire le véhicule (100) le long du trajet de stationnement (P) configuré ; et
conduire le véhicule (100) sur certains tronçons du trajet de stationnement (P) configuré, qui sont adjacents au trajet de déplacement prévu de l'objet, à une vitesse inférieure à celle sur d'autres tronçons du trajet de stationnement (P) configuré.

5. Dispositif de stationnement automatique selon la revendication 4, dans lequel le dispositif de commande (170) est configuré pour conduire le véhicule (100) sur au moins une portion d'un tronçon du trajet de stationnement (P) configuré, qui croise des voies, à la vitesse inférieure à celles sur d'autres tronçons du trajet de stationnement (P) configuré.

6. Dispositif de stationnement automatique selon la revendication 4, dans lequel le dispositif de commande (170) est configuré pour comporter un demi-tour sur le trajet de stationnement (P) configuré, et
dans lequel le dispositif de commande (170) est configuré pour :
avant que le véhicule (100) ne fasse demi-tour, conduire le véhicule (100) à une première vitesse (V1) ; et
conduire le véhicule (100) sur des tronçons du trajet de stationnement (P) configuré, qui sont adjacents au trajet de déplacement prévu de l'objet, à une deuxième vitesse (V2) inférieure à la première vitesse (V1), et
dans lequel le dispositif de commande (170) est configuré en outre pour :
après que le véhicule (100) a fait demi-tour, conduire le véhicule (100) à une troisième vitesse inférieure à la première vitesse (V1) ; et
lorsque le véhicule (100) est aligné avec un emplacement de stationnement (S), conduire le véhicule (100) à une quatrième vitesse (V4) plus élevée que la deuxième et la troisième vitesse (V2, V3).

7. Dispositif de stationnement automatique selon l'une quelconque des revendications 1 à 6, dans lequel, s'il est détecté que l'objet approche le véhicule (100) depuis le côté du véhicule (100), le dispositif de commande (170) est configuré pour ajuster différemment le trajet de stationnement (P) et la conduite sur le trajet de stationnement (P) configuré sur la base d'une distance entre l'objet et le véhicule (100).

8. Dispositif de stationnement automatique selon la revendication 7, dans lequel, s'il est détecté que l'objet passe devant le véhicule (100) dans une direction croisant une direction de conduite du véhicule (100), le dispositif de commande (170) est configuré pour :
arrêter le véhicule (100) ; et
après que l'objet a traversé le trajet de stationnement (P) configuré, conduire le véhicule le long du trajet de stationnement (P) configuré, et
dans lequel si l'objet ne se déplace pas pendant un temps prédéterminé ou davantage après l'arrêt du véhicule (100), le dispositif de commande (170) est configuré en outre pour reconfigurer le trajet de stationnement (P) configuré pour éviter l'objet.

9. Dispositif de stationnement automatique selon la revendication 7 ou 8, dans lequel, s'il est détecté que l'objet approche directement le côté du véhicule (100), le dispositif de commande (170) est configuré pour reconfigurer le trajet de stationnement (P) configuré pour éviter l'objet.

10. Dispositif de stationnement automatique selon la revendication 8 ou 9, dans lequel après que le véhicule (100) a fait demi-tour, le dispositif de commande (170) est configuré pour conduire le véhicule (100) à une deuxième vitesse (V2) inférieure à une première vitesse (V1) correspondant à une vitesse avant le demi-tour.
